(19) Europäisches Patentamt
European Patent Office
Office européen des brevets

(11) **EP 4 769 556 A1**

(12) **EUROPEAN PATENT APPLICATION**
published in accordance with Art. 153(4) EPC

(43) Date of publication:
**01.07.2026 Bulletin 2026/27**

(51) International Patent Classification (IPC):
***H01M 4/36*** $^{(2006.01)}$

(21) Application number: **25865292.4**

(52) Cooperative Patent Classification (CPC):
**H01M 4/36; H01M 4/505; H01M 4/525;**
**H01M 10/0525;** Y02E 60/10

(22) Date of filing: **23.10.2025**

(86) International application number:
**PCT/CN2025/129441**

(87) International publication number:
**WO 2026/057095 (19.03.2026 Gazette 2026/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **26.12.2024 CN 202411962916**

(71) Applicant: **BTR NANO TECH CO., LTD.**
**Shenzhen, Guangdong 518106 (CN)**

(72) Inventors:
• **SHENG, Jinzhi**
**Shenzhen, Guangdong 518106 (CN)**

• **LIU, Guoxue**
**Shenzhen, Guangdong 518106 (CN)**
• **ZHENG, Yu**
**Shenzhen, Guangdong 518106 (CN)**
• **SONG, Xiong**
**Shenzhen, Guangdong 518106 (CN)**
• **YANG, Shunyi**
**Shenzhen, Guangdong 518106 (CN)**
• **HUANG, Youyuan**
**Shenzhen, Guangdong 518106 (CN)**

(74) Representative: **Studio Torta S.p.A.**
**Via Viotti, 9**
**10121 Torino (IT)**

(54) **POSITIVE ELECTRODE MATERIAL AND BATTERY**

(57)     Provided is a cathode material and a battery. The cathode material has a mass content of free nitrate radical represented as Q ppm, where $10 \leq Q \leq 100$. In a particle size number distribution curve of the cathode material, the cathode material has a first characteristic peak and a second characteristic peak, where the first characteristic peak is located within a range of 0.1 $\mu$m to 1 $\mu$m, excluding 1 $\mu$m, and the second characteristic peak is located within a range of 1 $\mu$m to 4 $\mu$m. The cathode material simultaneously possesses excellent high-voltage resistance performance, structural stability, and cycling stability performance.

FIG. 1

**Description**

**CROSS-REFERENCE TO RELATED APPLICATION**

The present application claims priority to Chinese Application No. 202411962916.5, filed on December 26, 2024, the contents of both of which are incorporated herein by reference in their entireties.

**TECHNICAL FIELD**

The present disclosure relates to the field of a cathode, and in particular, to a cathode material and a battery.

**BACKGROUND**

A lithium-ion battery is widely applied in fields such as notebook computer, mobile phone, digital product, and the like due to high energy density, good safety performance, long cycle life, and being environmentally friendly. While, the cathode material has a relatively slow development compared to that of the large-capacity anode material (approximately 800 mAh/g to 1000 mAh/g). Therefore, researchers currently pay attention to development of a large-capacity cathode material for improvement of an energy density of lithium-ion battery.

At a high voltage, the cathode material, due to excessive de-intercalation of lithium ions, causes collapse of a layered crystal structure, causes cation mixing, and further results in release of lattice oxygen. While the battery generates gas, it also occurs significant decrease in capacity and cycling performance of the cathode material. In addition, at the high potential, side reactions between the cathode material and an electrolyte exacerbate, generating carbon dioxide gas, which causes change of a surface crystal structure of the cathode material, resulting in loss of lithium storage sites.

Therefore, there is an urgent problem to be solved currently that how to improve high-voltage resistance performance of the cathode material and reduce crystal structure distortion of the cathode material.

**SUMMARY**

The present disclosure is to provide a cathode material and a battery. The cathode material of the present disclosure has excellent high-voltage resistance performance, reduces crystal structure distortion of the cathode material, and further improve structural stability and cycling performance of the cathode material.

In a first aspect, embodiments of the present disclosure provide a cathode material. The cathode material has a mass content of free nitrate radical represented as Q ppm, where $10 \leq Q \leq 100$. In a particle size number distribution curve of the cathode material, the cathode material has a first characteristic peak and a second characteristic peak, where the first characteristic peak is located within a range of 0.1 $\mu$m to 1 $\mu$m, excluding 1 $\mu$m, and the second characteristic peak is located within a range of 1 $\mu$m to 4 $\mu$m.

In a second aspect, embodiments of the present disclosure provide an oxide precursor. By measuring the oxide precursor through XRD, the oxide precursor has diffraction peaks at $2\theta$ ranging from 34.4° to 36.4° and from 42.3° to 44.3°, respectively.

In a third aspect, embodiments of the present disclosure further provide a cathode plate. The cathode plate includes the cathode material according to the first aspect or a cathode material prepared from the oxide precursor according to the second aspect.

In a fourth aspect, embodiments of the present disclosure provide a battery. The battery includes the cathode material according to the first aspect or a cathode material prepared from the oxide precursor according to the second aspect.

Compared with the prior art, the present disclosure possesses the following advantages: by synergistically controlling the mass content of free nitrate radical and the particle size of the cathode material, the present disclosure not only improves lattice distortion of the cathode material at a high voltage, but also increases transport efficiency of lithium ions, thereby the cathode material simultaneously possesses excellent high-voltage resistance performance, structural stability, and high-voltage cycling stability performance.

**BRIEF DESCRIPTION OF THE DRAWINGS**

To illustrate the technical solutions in embodiments of the present disclosure or the prior art clearly, the drawings required in the description of the embodiments or the prior art will be briefly introduced below. It is apparent that the drawings in the following description are merely some embodiments of the present disclosure, and for those of ordinary skill in the art, other drawings may also be obtained according to these drawings without creative efforts.

FIG. 1 is a schematic diagram of the battery provided by embodiments of the present disclosure in the discharging state;

FIG. 2 is a SEM image of the oxide precursor of the cathode material prepared by Example 1 of the present disclosure;

FIG. 3 is an XRD pattern of the oxide precursor of the cathode material prepared by Example 1 of the present disclosure;

FIG. 4 is a SEM image of the cathode material prepared by Example 1 of the present disclosure;

FIG. 5 is a particle size number distribution curve of the cathode material prepared by Example 1 of the present disclosure;

FIG. 6 is an XPS spectrum of element Li on a surface of the cathode material prepared by Example 1 of the present disclosure after charging and discharging for one cycle;

FIG. 7 is an XRD pattern of the oxide precursor of the cathode material prepared by Comparative Example 1 of the present disclosure;

FIG. 8 is an XPS spectrum of Li element on a surface of the cathode material prepared by Comparative Example 1 of the present disclosure after charging and discharging for one cycle.

## DESCRIPTION OF EMBODIMENTS

To better understand the technical solutions of the present disclosure, the embodiments of the present disclosure are described in detail below with reference to the accompanying drawings.

It should be clarified that the described embodiments are merely some of the embodiments of the present disclosure rather than all the embodiments. Based on the embodiments of the present disclosure, all other embodiments obtained by persons of ordinary skill in the art without creative efforts shall fall within the protection scope of the present disclosure.

In addition, the terms "first" and "second" are used for descriptive purposes only, and cannot be understood as indicating or implying relative importance or implicitly specifying the quantity of the indicated technical features. Thus, a feature defined by "first" or "second" may explicitly or implicitly include one or more of the features.

For ease of understanding the present disclosure, certain terms are appropriately defined in the present disclosure. Unless otherwise defined herein, scientific terms and technical terms used in the present disclosure have meanings commonly understood by those skilled in the art in the field to which the present disclosure belongs.

Embodiments of the present disclosure provide a cathode material. The cathode material has a mass content of free nitrate radical represented as Q ppm, where $10 \leq Q \leq 100$. In a particle size number distribution curve of the cathode material, the cathode material has a first characteristic peak and a second characteristic peak, where the first characteristic peak is located within a range of 0.1 $\mu$m to 1 $\mu$m, excluding 1 $\mu$m, and the second characteristic peak is located within a range of 1 $\mu$m to 4 $\mu$m.

Therefore, by synergistically controlling the mass content of free nitrate radical and the particle size number distribution of particles of the cathode material, the present disclosure not only improves lattice distortion of the cathode material at a high voltage, but also increases transport efficiency of lithium ions, thereby the cathode material simultaneously possesses excellent high-voltage resistance performance, structural stability, and cycling stability performance. As the mass content Q ppm of the free nitrate radical of the cathode material satisfying $10 \leq Q \leq 100$, the cathode material possesses good structural stability and high-voltage cycling performance. During charging and discharging of the cathode material, the free nitrate radical present in the cathode material reacts with active lithium ions to induce formation of $Li_2O$ on a surface of the cathode material. $Li_2O$ possesses high-voltage resistance performance, facilitating improvement of the high-voltage resistance performance of the cathode material. Moreover, $Li_2O$ distributes on the surface of the cathode material, which reduces surface energy of the cathode material, facilitating improvement of crystal structure stability of the cathode material and reduction of oxygen escaped from a lattice. Further, by controlling the particle size distribution of the cathode material to satisfy the above first characteristic peak and second characteristic peak, the particle size number distribution of particles is more appropriate, thereby facilitating increase of packing density of cathode material particles. Closely packed particles increases transport efficiency of lithium ions and reduces impedance among particles, thereby improving the problem of a decrease in transport rate of lithium ions due to the $Li_2O$ on the surface of the cathode material, and further reducing the possibility of the decrease in transport rate of lithium ions due to the $Li_2O$ on the basis of improvement of the high-voltage resistance performance of the cathode material.

In some embodiments, the cathode material has a chemical formula of $Li_nNi_xM_yMn_zO_2$, where $0.9 \leq n \leq 1.1$, $0 \leq y < 1$, $0 \leq z < 1$, $x + y + z = 1$, and y and z are not both 0, and where M is a metallic element.

In some embodiments, n may specifically take a value of 0.90, 0.92, 0.95, 0.96, 0.98, 0.99, 1.0, 1.02, 1.05, 1.08, or 1.1, etc. y may specifically take a value of 0, 0.001, 0.06, 0.1, 0.2, 0.28, 0.3, 0.4, 0.5, 0.6, 0.7, 0.8, 0.9, or 0.99, etc. z may specifically take a value of 0, 0.001, 0.1, 0.2, 0.3, 0.4, 0.5, 0.6, 0.7, 0.8, 0.9, or 0.99, etc. n, y, and z may be other values within above ranges, which are not limited herein.

In some embodiments, the cathode material is a lithium nickel cobalt manganese composite oxide, a lithium nickel cobalt aluminum composite oxide, a lithium nickel cobalt composite oxide, a lithium nickel manganese composite oxide, etc., which is not limited herein.

In some embodiments, $0.9 \leq n < 1.1$.

In some embodiments, the metallic element M includes at least one of Co, Al, Zr, Mg, W, Ti, Ba, Sr, Mg, Cr, Zn, V, Cu, Nb, Mo, Y, and W. Introduction of the metallic element M changes a lattice constant of the cathode material or a valence state of an intrinsic element of the material, reduces cation mixing, increases electronic conductivity and ionic conductivity of the cathode material, improves structure stability of the material, and inhibits collapse of crystal structure of the cathode material, thereby improving the high-voltage cycling performance of the cathode material.

In some embodiments, the particles having the second characteristic peak within a particle size range of 1 $\mu$m to 4 $\mu$m has a particle size distribution width represented as Span(a), which satisfies $0.8 < Span(a) < 1.64$. Span(a) may specifically be 0.81, 0.85, 0.89, 0.92, 0.98, 1.01, 1.05, 1.2, 1.25, 1.3, 1.39, 1.4, 1.42, 1.45, 1.5, 1.57, or 1.63, etc., which is not limited herein. In some embodiments, Span(a) satisfies $0.8 < Span(a) < 1.4$.

It should be noted that

$$Span(a) = \frac{D90_{p1} - D10_{p1}}{D50_{p1}};$$

where, by characterizing a particle size number distribution of the cathode material through a laser particle size analyzer, particle size number distribution data of the cathode material are exported, points with a minimum quantity proportion on two sides of the second characteristic peak are selected as a starting point and an end point, data between the starting point and the end point of the second characteristic peak are imported into Origin software, a particle size distribution width graph of the second characteristic peak is obtained through Gaussian fitting, and then $D90_{p1}$, $D10_{p1}$, and $D50_{p1}$ of the particle size distribution width of the second characteristic peak are obtained, where $D90_{p1}$ represents a particle size corresponding to a cumulative particle size number distribution in the second characteristic peak reaching 90%, $D50_{p1}$ represents a particle size corresponding to the cumulative particle size number distribution in the second characteristic peak reaching 50%, and $D10_{p1}$ represents a particle size corresponding to the cumulative particle size number distribution in the second characteristic peak reaching 10%.

In some embodiments, the particles having the first characteristic peak within a particle size range of 0.1 $\mu$m to 1 $\mu$m, excluding 1 $\mu$m has a particle size distribution width represented as Span(b), which satisfies $0.4 < Span(b) < 0.8$. Span(b) may specifically be 0.41, 0.42, 0.45, 0.58, 0.62, 0.7, 0.72, 0.75, or 0.795, etc., which is not limited herein.

It should be noted that

$$Span(b) = \frac{D90_{p2} - D10_{p2}}{D50_{p2}};$$

where, by characterizing a particle size number distribution of the cathode material through a laser particle size analyzer, particle size number distribution data of the cathode material are exported, points with a minimum quantity proportion on two sides of the first characteristic peak are selected as a starting point and an end point, data between the starting point and the end point of the first characteristic peak are imported into Origin software, a particle size distribution width graph of the first characteristic peak is obtained through Gaussian fitting, and then $D90_{p2}$, $D10_{p2}$, and $D50_{p2}$ of the particle size distribution width of the first characteristic peak are obtained, where $D90_{p2}$ represents a particle size corresponding to a cumulative particle size number distribution in the first characteristic peak reaching 90%, $D50_{p2}$ represents a particle size corresponding to the cumulative particle size number distribution in the first characteristic peak reaching 50%, and $D10_{p2}$ represents a particle size corresponding to the cumulative particle size number distribution in the first characteristic peak reaching 10%.

In some embodiments, the first characteristic peak and the second characteristic peak have an intensity ratio X satisfying $X \geq 1.5$, which indicates that in the cathode material, the second characteristic peak is relatively shorter and more rounded, conforming to a normal distribution, while the first characteristic peak is narrower and higher, indicating a narrow distribution width and a uniform particle size of the particles in a fine powder state at the first characteristic peak. In some embodiments, the intensity ratio of the first characteristic peak and the second characteristic peak may specifically be 1.5, 1.6, 1.7, 1.8, 1.9, 2.0, 2.1, 2.2, 2.3, 2.4, 2.5, 2.6, 2.7, 2.8, 2.9, 3.0, 3.3, 3.5, 4, or any value within a range composed of any two of the above values.

Accordingly, the intensity ratio X of the first characteristic peak and the second characteristic peak satisfies $X \geq$

1.5, allowing the fine powder particles at the first characteristic peak fill better into gaps among the particles at the second characteristic peak, thereby batter increasing packing density of the particles, increasing the transport rate of lithium ions, and improving the problem of a decrease in transport rate of lithium ions due to the $Li_2O$ on the surface of the cathode material. Further, since the particle size distribution width Span(b) of the first characteristic peak is smaller than the particle size distribution width Span(a) of the second characteristic peak, the distribution of the first characteristic peak is narrower, indicating the relatively uniform particle size of the particles in the fine powder state, thereby facilitating further improvement of the distribution of the fine powder particles at the first characteristic peak among the particles at the second characteristic peak, and further facilitating increasing the transport rate of lithium ions.

In some embodiments, the first characteristic peak has a peak percentage of 6% to 15%, which may specifically be 6%, 7%, 8%, 9%, 10%, 11%, 12%, 13%, 14%, or 15%. The second characteristic peak has a peak percentage of 5% to 13%, which may specifically be 5%, 6%, 7%, 8%, 9%, 10%, 11%, 12%, or 13%.

In some embodiments, the mass content of free nitrate radical of the cathode material may specifically be 10 ppm, 12 ppm, 25 ppm, 30 ppm, 50 ppm, 68 ppm, 75 ppm, 80 ppm, 85 ppm, 95 ppm, or 100 ppm, etc, or other value within the above ranges, which is not limited herein. If the mass content of free nitrate radical of the cathode material is excessively high, too more $Li_2O$ forms on the surface of the cathode material, causing blocked ion transport of the cathode material. If the mass content of free nitrate radical of the cathode material is excessively low, too little $Li_2O$ forms on the surface of the cathode material, and side reactions between the cathode material and an electrolyte intensify, especially during charging and discharging at a high-voltage, capacity loss of the cathode material intensifies. By controlling the mass content of free nitrate radical of the cathode material within the above range in the present disclosure, it is beneficial for the cathode material to simultaneously possess high-voltage resistance performance, as well as excellent cycling stability and high capacity.

In some embodiments, the cathode material has a volume particle size distribution satisfying $1.0\ \mu m \leq Dv10 \leq 2.5\ \mu m$, $3.0\ \mu m < Dv50 \leq 4.5\ \mu m$, and $6.0\ \mu m \leq Dv90 \leq 10.0\ \mu m$. In some embodiments, Dv10 may specifically be $1.0\ \mu m$, $1.2\ \mu m$, $1.4\ \mu m$, $1.5\ \mu m$, $1.8\ \mu m$, $2.0\ \mu m$, or $2.5\ \mu m$, etc. Dv50 may specifically be $3.0\ \mu m$, $3.2\ \mu m$, $3.5\ \mu m$, $3.8\ \mu m$, $4.0\ \mu m$, $4.2\ \mu m$, or $4.5\ \mu m$, etc. Dv90 may specifically be $6.0\ \mu m$, $6.5\ \mu m$, $6.8\ \mu m$, $7.0\ \mu m$, $8.0\ \mu m$, $9.2\ \mu m$, or $10.0\ \mu m$, etc. Dv10, Dv50 and Dv90 may be other values within the above ranges, which are not limited herein. In the present disclosure, controlling the volume particle size distribution of the cathode material to satisfy the above conditions improves compact density of the cathode material and increases cycling stability of the cathode material.

In some embodiments, the cathode material has a mass content of free sulfate radical represented as K ppm, where $10 \leq K \leq 800$, which may specifically be 10 ppm, 50 ppm, 80 ppm, 100 ppm, 150 ppm, 200 ppm, 275 ppm, 400 ppm, 470 ppm, 560 ppm, 650 ppm, 780 ppm, or 800 ppm, etc., or other value within the above range, which is not limited herein. Controlling the mass content of free sulfate radical within the above range increases a migration rate of lithium ions, increases capacity of the cathode material, and improves structure stability of the cathode material. Since the free sulfate radical is a strong hydrophilic group, the existence of the sulfate radical improves hydrophilicity and surface energy of surface of the cathode material, promoting enrichment of the fine powder particles on the surface of the cathode material, thereby increasing surface activity of the surface of the cathode material and improving the problem of a decrease in transport rate of lithium ions due to the $Li_2O$ on the surface of the cathode material.

In some embodiments, the cathode material is a single-crystal material. The cathode material includes crystal grains with an average particle size of $1\ \mu m$ to $5\ \mu m$. The crystal grain is a primary particle.

It should be noted that the term "single crystal" known by those skilled in the art is not a "single crystal" in a strict sense. In crystallography, an ideal single crystal refers to a crystal with a completely uniform arrangement and orientation. However, limited by impurities, strain, and crystal defects, the ideal single crystal is very rare and difficult to produce in reality. Therefore, a material known in the art to have a single-crystal structure is actually more often a cathode material with "a single-crystal-like morphology", which only exhibit a large particle size similar to the single crystal in size, distinguishing from the polycrystalline particle composed of a plurality of small primary particles.

The crystal grains with uniform orientation in the present disclosure may be a single particle composed of one primary particle. The above single-crystal cathode material may also include a little of "secondary-like particles" formed by several single particles adhering to each other. The term "primary particle" refers to a minimum particle unit identified by observing a cathode active material through a scanning electron microscope. In some embodiments, the above "secondary-like particle" is formed by no more than 10 single particles adhering to each other.

It should be noted that the single-crystal cathode material is different from a polycrystalline cathode material (i.e., polycrystalline secondary particle) in that the minimum particle of the polycrystalline secondary particle is a secondary particle formed by agglomeration of nano-scale primary particles. For the single-crystal cathode material, its minimum particle is usually a micron-scale single primary particle. Generally, in addition to a testing means of electron backscatter diffraction (EBSD), whether an obtained cathode product is a single-crystal material can also be determined through characterization means such as scanning electron microscopy (SEM). In some embodiments, for a single-crystal cathode material, morphology of single-crystal particles is characterized through SEM, showing the appearance of the single-crystal particles generally appears as a regular or irregular spherical shape without significant agglomeration of particles.

The orientation of the single-crystal cathode material is also characterized through EBSD. It is observed through EBSD that at least one crystal grain has the same color therein, so as to determine that the at least one crystal grain has uniform orientation therein. The crystal grain with uniform orientation is a single crystal.

It should be further noted that the term "single-crystal cathode material" known by those skilled in the art is not a "single crystal" in a strict crystallographic sense. In crystallography, an ideal single crystal refers to a crystal with a completely uniform arrangement and orientation. However, limited by impurities, strain, and crystal defects, the ideal single crystal is very rare and difficult to produce in a laboratory. Therefore, a single-crystal cathode material known in the art is actually more often a cathode material with "a single-crystal-like morphology", which only exhibit a large particle size similar to the single crystal in size, distinguishing from the polycrystal composed of a plurality of small primary particles.

In some embodiments, the crystal grains has an average particle size of 1 $\mu$m to 5 $\mu$m, which may specifically be 1.0 $\mu$m, 1.2 $\mu$m, 1.4 $\mu$m, 1.5 $\mu$m, 1.8 $\mu$m, 2.0 $\mu$m, 2.4 $\mu$m, 2.8 $\mu$m, 3.0 $\mu$m, 3.5 $\mu$m, 3.8 $\mu$m, 4.0 $\mu$m, 4.2 $\mu$m, 4.5 $\mu$m, 4.8 $\mu$m, or 5.0 $\mu$m, etc., or other value within the above range, which is not limited herein. In the present disclosure, controlling the particle size of the crystal grains within the above range reduces impedance of the cathode material and increases the transport efficiency of lithium ions, thereby facilitating increasing the capacity of the cathode material.

In some embodiments, the cathode material has a specific surface area of 0.5 $m^2$/g to 1.5 $m^2$/g, which may specifically be 0.5 $m^2$/g, 0.6 $m^2$/g, 0.8 $m^2$/g, 1.0 $m^2$/g, 1.1 $m^2$/g, 1.2 $m^2$/g, 1.3 $m^2$/g, 1.4 $m^2$/g, or 1.5 $m^2$/g, etc., or other value within the above range, which is not limited herein. By controlling the specific surface area of the cathode material within the above range, the cathode material exhibits high capacity, initial coulombic efficiency, and cycling stability, as well as low gas production.

In some embodiments, the cathode material has a tap density of 1.0 $g/cm^3$ to 3.0 $g/cm^3$, which may specifically be 1.0 $g/cm^3$, 1.2 $g/cm^3$, 1.3 $g/cm^3$, 1.4 $g/cm^3$, 1.5 $g/cm^3$, 1.6 $g/cm^3$, 1.7 $g/cm^3$, 1.8 $g/cm^3$, 1.9 $g/cm^3$, 2.0 $g/cm^3$, 2.1 $g/cm^3$, 2.2 $g/cm^3$, 2.4 $g/cm^3$, 2.5 $g/cm^3$, 2.8 $g/cm^3$, or 3.0 $g/cm^3$, etc., or other value within the above range, which is not limited herein. Controlling the tap density of the cathode material within the above range facilitates improvement of processing performance of the material and increases energy density of a battery.

In some embodiments, the cathode material has a compact density of 2.5 $g/cm^3$ to 3.5 $g/cm^3$, which may specifically be 2.5 $g/cm^3$, 2.6 $g/cm^3$, 2.7 $g/cm^3$, 2.8 $g/cm^3$, 2.9 $g/cm^3$, 3.0 $g/cm^3$, 3.1 $g/cm^3$, 3.2 $g/cm^3$, 3.4 $g/cm^3$, or 3.5 $g/cm^3$, etc., or other value within the above range, which is not limited herein. By controlling the compact density of the cathode material within the above range facilitates increasing energy density of a battery.

In some embodiments, the cathode material has a bulk density of 0.5 $g/cm^3$ to 1.5 $g/cm^3$, which may specifically be 0.5 $g/cm^3$, 0.6 $g/cm^3$, 0.7 $g/cm^3$, 0.8 $g/cm^3$, 0.9 $g/cm^3$, 1.0 $g/cm^3$, 1.1 $g/cm^3$, 1.2 $g/cm^3$, 1.4 $g/cm^3$, or 1.5 $g/cm^3$, etc., or other value within the above range, which is not limited herein. By controlling the bulk density of the cathode material within the above range facilitates increasing energy density of a battery.

In some embodiments, a button battery made of the cathode material has a capacity retention rate of $\geq$ 95% after 50 cycles at high-voltage, which may specifically be 95%, 95.2%, 95.3%, 95.5%, 95.7%, 96.1%, 96.5%, 96.9%, 97.3%, 97.9%, or 98.3%, etc., or other value within the above range, which is not limited herein. In some embodiments, the button battery made of the cathode material has a capacity retention rate of 95% to 97.3% after 50 cycles at high-voltage. The capacity retention rate of the cathode material after 50 cycles at high-voltage being within the above range indicates that the cathode material has good high-voltage resistance performance and cycling stability.

In some embodiments, after charging and discharging a button battery made of the cathode material for one cycle, the cathode material is characterized through XPS. In an XPS spectrum of the cathode material, the cathode material has a $Li_2O$ phase. Accordingly, by characterizing the cycled cathode material through XPS to have the $Li_2O$ phase, it confirms that the free nitrate radical present in the cathode material reacts with active lithium ions to induce formation of $Li_2O$ on surface of the cathode material. In some embodiments, in the XPS spectrum of the cathode material, the cathode material has a characteristic peak at a binding energy between 53.5 eV and 55 eV.

It should be noted that a preparation method of the above button battery is as follows:

preparation of raw materials: NCM:SP:5% of polyvinylidene fluoride (PVDF) adhesive = 93:5:2 = 9.3 g : 0.5 g : 4.0 g, NMP = 9 g, which are stirred at high speed for dispersing uniformly;

coating and drying: a slurry is coated uniformly on an aluminum foil with a thickness of 20 $\mu$m by using a 210 $\mu$m coating machine, a coating length is set as a maximum length of the coating machine, a latter half section of a plate is cut and placed into a blast drying oven at 100°C for drying for 1.5 h or more;

rolling, punching, and drying: a roller press is adjusted to 1 roller gap for rolling for 3 times; a 14 mm punching machine is used for punching; after weighing, the sample is placed into a vacuum drying oven for vacuum drying at 85°C for 8 h or more; and

button battery (LIR2016) assembly: cathode shell - 2 drops of electrolyte - cathode plate (14 mm) - 3 drops of electrolyte - 20 $\mu$m separator - 2 drops of electrolyte - $\varphi$16*1.0 mm lithium plate - 150 $\mu$m nickel foam - anode shell (dried at 50°C), which are assembled to a battery, then sealed, and taken out from a glove box for testing; After standing for 12 h, the button battery is charged at 0.1C and discharged at 0.1C for one cycle.

XPS characterization of the cycled cathode material: the cathode plate is taken out from the button battery after charging at 0.1C and discharging at 0.1C for one cycle, powder on a surface of the cathode plate is scrapped off by using a scraper, and the scraped powder is characterized by using an XPS spectrometer, to obtain an XPS spectrum.

In a second aspect, embodiments of the present disclosure provide a cathode material precursor. By measuring an oxide precursor through XRD, the oxide precursor has diffraction peaks at 35.4°±1° and 43.3°±1°, respectively. The oxide precursor having a diffraction peak at 35.4°±1° indicates that some particles of the oxide precursor exhibit a rock-salt phase, for example, may be NiO exhibiting the rock-salt phase; and some particles exhibit a spinel phase, for example, may be $NiMn_2O_4$. Sintering precursor particles exhibiting the rock salt phase forms particles with a relatively large particle size, and sintering precursor particles exhibiting the spinel phase forms particles with a relatively small particle size, thereby facilitating formation of the cathode material satisfying the above first characteristic peak and second characteristic peak.

In some embodiments, by measuring the oxide precursor through XRD, the oxide precursor has diffraction peaks at 2θ ranging from 34.4° to 36.4° and from 42.3° to 44.3°, respectively.

In a third aspect, embodiments of the present disclosure provide a preparation method of a cathode material, including the following steps:

S10, performing a hydroxide precursor of a cathode material on a nitration and annealing treatment to obtain an oxide precursor containing nitrate ions;

S20, performing a primary sintering treatment on a mixture including the oxide precursor containing nitrate ions, and a lithium source to obtain a primary sintering product, where the primary sintering treatment includes a first heating stage at a temperature of 300°C to 600°C, a second heating stage at a temperature of 700°C to 1000°C, a first cooling stage at a temperature of 500°C to 700°C, and a third heating stage at a temperature of 720°C to 1000°C in sequence; and

S30, jet milling and grading the primary sintering product to obtain the cathode material.

In the preparation method of a cathode material provided by the present disclosure, a hydroxide precursor of a cathode material is subjected to a nitration and annealing treatment to obtain an oxide precursor containing nitrate ions; and then, a primary sintering treatment is subjected to a mixture including the oxide precursor containing nitrate ions, and a lithium source. During the primary sintering treatment, the oxide precursor has a lower reaction activity than that of the hydroxide precursor. Thus, through several stages of heating and cooling treatments, it is beneficial for formation of single-crystal particles in the cathode material. After then, the primary sintering product is jet milled and graded to adjust the particle size of the particles, such that there are two different characteristic peaks in the particle size number distribution curve, thereby enabling the cathode material to simultaneously possess excellent high-voltage resistance performance, structural stability, and high-voltage cycling stability performance.

The preparation method of the present disclosure is explained below in detail with reference to examples.

Prior to the step S10, the above method further incudes:

S01, preparing salt solutions of nickel, manganese, and element M, mixing them in a certain stoichiometric ratio to obtain a mixed solution, and adjusting a pH value of the mixed solution and subjecting to a co-precipitation method to obtain the hydroxide precursor of the cathode material.

In some embodiments, a stoichiometric ratio range among nickel, manganese, and element M satisfies the following conditions: $0.5 \leq Ni < 1$, $0 \leq Mn < 1$, $0 \leq M < 1$, where the element M includes at least one of Co, Al, Zr, Mg, W, Ti, Ba, Sr, Mg, Cr, Zn, V, Cu, Nb, Mo, Y, and W. Co and Mn are not both 0. In some embodiments, a molar ratio of Ni:Co:Mn may specifically be 0.60:0.10:0.30, 0.67:0.05:0.28, or 0.90:0.5:0.05, etc.

In some embodiments, the salt solution is a sulfate, and may specifically be a mixed solution of sulfates of Ni, Co, and Mn or Al. Sulfate radical in this sulfate solution is a part of source of sulfate radical in the cathode material.

In some embodiments, the pH value of the mixed solution is 7 to 14, which may specifically be 7, 7.5, 8, 8.5, 9, 9.5, 10, 11, 12, 13, or 14, etc., or other value within the above range, which is not limited herein.

In some embodiments, the co-precipitation method adopts a regulator which may be aqueous ammonia, citric acid, ethylene glycol, etc., to facilitate precipitation and separation of hydroxide in the mixed solution.

In some other embodiments, a hydroxide precursor commercially purchased may be used.

S10, performing a hydroxide precursor of a cathode material on a nitration and annealing treatment to obtain an oxide precursor containing free nitrate ions.

In some embodiments, the nitration and annealing treatment is performed by heat preservation in a mixed atmosphere containing nitric acid for a certain time and then annealing.

In some embodiments, the mixed atmosphere includes nitric acid with a volume concentration of 1% to 3%, which may specifically be 1%, 1.5%, 2%, 2.5%, 2.8%, or 3.0%, etc., or other value within the above range, which is not limited herein.

In some embodiments, the mixed atmosphere includes oxygen with a mass content of < 1.0 ppm. Too much oxygen will accelerate crystal grain growth of the oxide precursor, which is not conducive to maintaining uniformity of precursor particles, and leads to a decrease in reaction activity of the oxide precursor. Moreover, controlling oxygen content also reduces a possibility of explosion of the mixed atmosphere containing nitric acid.

In some embodiments, the mixed atmosphere includes nitric acid vapor and water vapor.

In some embodiments, the nitration and annealing treatment is performed at a temperature of 200°C to 800°C, which may specifically be 200°C, 250°C, 300°C, 350°C, 480°C, 550°C, 600°C, 630°C, 650°C, 680°C, 700°C, 750°C, 780°C, or 800°C, etc., or other value within the above range, which is not limited herein.

In some embodiments, the nitration and annealing treatment is performed at a heating rate of 0.5°C/min to 3°C/min, which may specifically be 0.5°C/min, 0.8°C/min, 1.0°C/min, 1.5°C/min, 1.8°C/min, 2.0°C/min, 2.5°C/min, or 3.0°C/min, etc., or other value within the above range, which is not limited herein.

In some embodiments, the nitration and annealing treatment is performed for a heat preservation time of 3 h to 10 h, which may specifically be 3 h, 4 h, 5 h, 6 h, 7 h, 8 h, 9 h, or 10 h, etc., or other value within the above range, which is not limited herein.

In some embodiments, the nitration and annealing treatment is performed under an ambient pressure less than a pressure of the mixed atmosphere.

In some embodiments, the ambient pressure of the nitration and annealing treatment is 2.0 kPa to 4.0 kPa, which may specifically be 2.0 kPa, 2.2 kPa, 2.5 kPa, 2.8 kPa, 3.0 kPa, 3.2 kPa, 3.5 kPa, or 4.0 kPa, etc., or other value within the above range, which is not limited herein.

In the present disclosure, by controlling process parameters such as ambient pressure, heat preservation time, and annealing temperature during the nitration and annealing treatment process, it is beneficial for the oxide precursor to form an appropriate amount of nitrate ions.

S20, performing a primary sintering treatment on a mixture including the oxide precursor containing nitrate ions, and a lithium source to obtain a primary sintering product.

In some embodiments, the lithium source includes at least one of lithium hydroxide, lithium carbonate, lithium nitrate, lithium acetate, lithium sulfate, and lithium oxalate. In some embodiments, the lithium salt is lithium carbonate.

In some embodiments, amounts of the lithium source and the oxide precursor satisfy that a ratio of a molar amount of Li and a total molar amount of all metals in the oxide precursor is (0.87 to 1.25):1, which may specifically be 0.87:1, 0.89:1, 0.92:1, 0.95:1, 0.98:1, 1.02:1, 1.05:1, 1.1:1, 1.17:1, or 1.25:1, etc., or other value within the above range, which is not limited herein. Within this range, a mixing degree of Li/Ni cations is reduced, and excessive residual lithium on a surface of a sintered product is prevented from affecting processing performance and safety.

In some embodiments, by measuring an oxide precursor through XRD, the oxide precursor has diffraction peaks at $35.4°\pm1°$ and $43.3°\pm1°$, respectively. The oxide precursor having a diffraction peak at $35.4°\pm1°$ indicates that some particles of the oxide precursor exhibit a rock-salt phase, for example, may be NiO exhibiting the rock-salt phase; and some particles exhibit a spinel phase, for example, may be $NiMn_2O_4$. Sintering precursor particles exhibiting the rock salt phase forms particles with a relatively large particle size, and sintering precursor particles exhibiting the spinel phase forms particles with a relatively small particle size.

In some embodiments, the mixture further includes a dopant containing metallic M, where the element M includes at least one of Zr, Mg, Ti, Ba, Sr, Cr, Zn, V, Cu, Nb, Mo, Y, and W. In some embodiments, the dopant is a salt or an oxide containing the metallic M.

In some embodiments, the dopant includes at least one of $Nb_2O_5$, $Nb_2O_3$, $MoO_3$, $WO_2$, $WO_3$, $V_2O_5$, $V_2O_3$, $Sr(OH)_2$, SrO, $SrCO_3$, $TiO_2$, $ZrO_2$, $Zr(OH)_4$, $Y_2O_3$, BaO, $Cr_2O_3$, ZnO, CuO, $Ta_2O_5$, CaO, $Sb_2O_3$, $Sb_2O_5$, $H_3BO_3$, MgO and $Mg(OH)_2$. In some embodiments, the dopant containing metallic M is a compound of Zr or Ti.

In some embodiments, the mixture is obtained under a mixing condition of solid-phase mixing at 10°C to 50°C for 0.3 h to 3 h.

In some embodiments, the temperature for the solid-phase mixing may be 10°C, 15°C, 20°C, 25°C, 30°C, 35°C, 40°C, 45°C, or 50°C, the time for the solid-phase mixing may be 0.3 h, 0.4 h, 0.5 h, 0.6 h, 0.8 h, 1 h, 1.5 h, 1.8 h, 2.5 h, or 3 h, etc., or other values within the above range, which are not limited herein. In some embodiments, the temperature for the solid-phase mixing is 10°C to 35°C.

In some embodiments, an equipment for mixing is at least one of a ball mill, a three-dimensional mixer, a high-speed mixer, and a VC mixer.

In some embodiments, the primary sintering treatment includes the primary sintering treatment includes a first heating stage at a temperature of 300°C to 600°C, a second heating stage at a temperature of 700°C to 1000°C, a first cooling stage at a temperature of 500°C to 700°C, and a third heating stage at a temperature of 720°C to 1000°C in sequence.

In some embodiments, the temperature for the first heating stage may specifically be 300°C, 350°C, 380°C, 400°C, 430°C, 450°C, 500°C, 550°C, 580°C, or 600°C, etc. The first heating stage is performed for a time of 3 h to 5 h, which may specifically be 3 h, 3.5 h, 4 h, 4.5 h, or 5 h, etc., but is not limited to the recited values, and other non-recited value within the value range is also applicable. The temperature for the first heating stage is relatively low, so that the lithium source is melted fully and react with the oxide precursor.

In some embodiments, the first heating stage is performed at a heating rate of 15°C/min to 20°C/min, which may specifically be 15°C/min, 16°C/min, 17°C/min, 18°C/min, 19°C/min, or 20°C/min, etc., or other value within the above range, which is not limited herein.

In some embodiments, the temperature for the second heating stage may specifically be 700°C, 720°C, 770°C, 800°C, 880°C, 900°C, or 1000°C, etc., but is not limited to the recited values, and other non-recited value within the value range is also applicable. The second heating stage is performed for a time of 4 h to 12 h, which may specifically be 4 h, 5 h, 6 h, 8 h, 9 h, 10 h, 11 h, or 12 h, etc., but is not limited to the recited values, and other non-recited value within the value range is also applicable. In the second heating stage, crystal grains of the cathode material grow initially, while excessive growth of particles is reduced.

In some embodiments, the second heating stage is performed at a heating rate of 0.5°C/min to 3°C/min, which may specifically be 0.5°C/min, 0.6°C/min, 0.7°C/min, 1.0°C/min, 1.2°C/min, 1.5°C/min, 2.0°C/min, 2.2°C/min, 2.5°C/min, 2.8°C/min, or 3°C/min, etc., or other value within the above range, which is not limited herein.

In some embodiments, the temperature for the first cooling stage may be 500°C, 550°C, 580°C, 600°C, 620°C, 650°C, 680°C, 690°C, or 700°C, etc., but is not limited to the recited values, and other non-recited value within the value range is also applicable. The first cooling stage is performed for a time of 2 h to 6 h, which may specifically be 2 h, 3 h, 4 h, 5 h, 5.5 h, or 6 h, etc., but is not limited to the recited values, and other non-recited value within the value range is also applicable. This cooling process enables rearrangement of atoms on a surface of grown primary particles to form a surface structure with lower free energy and higher chemical stability.

In some embodiments, the first cooling stage is performed at a cooling rate of 0.5°C/min to 3°C/min, which may specifically be 0.5°C/min, 0.6°C/min, 0.7°C/min, 1.0°C/min, 1.2°C/min, 1.5°C/min, 2.0°C/min, 2.2°C/min, 2.5°C/min, 2.8°C/min, or 3°C/min, etc., or other value within the above range, which is not limited herein.

In some embodiments, the temperature for the third heating stage may specifically be 720°C, 770°C, 800°C, 880°C, 900°C, or 1000°C, etc., but is not limited to the recited values, and other non-recited value within the value range is also applicable. The third heating stage is performed for a time of 1 h to 3 h, which may specifically be 1 h, 1.5 h, 2 h, 2.5 h, or 3 h, etc., but is not limited to the recited values, and other non-recited value within the value range is also applicable. In this heating stage, the crystal structure of primary particles of the cathode material is allowed to grow fully to ensure structure stability of the primary particles.

In some embodiments, the third constant temperature stage is performed at a heating rate of 0.5°C/min to 3°C/min, which may specifically be 0.5°C/min, 0.6°C/min, 0.7°C/min, 1.0°C/min, 1.2°C/min, 1.5°C/min, 2.0°C/min, 2.2°C/min, 2.5°C/min, 2.8°C/min, or 3°C/min, etc., or other value within the above range, which is not limited herein.

In some embodiments, after the third constant temperature stage, cooling sintered product to a room temperature.

In some embodiments, the primary sintering treatment is performed under an oxygen-containing atmosphere, where the oxygen-containing atmosphere has an oxygen content of $\geq 95\%$.

In some embodiments, when the dopant containing metallic M is the compound of Zr or Ti, the primary sintering treatment is performed at a temperature of 800°C to 900°C for a heat preservation time of 8 h to 10 h.

S30, jet milling and grading the primary sintering product to obtain the cathode material.

In some embodiments, the jet milling is under a pressure range of 0.3 MPa to 0.6 MPa. In some embodiments, the pressure range of the jet milling may specifically be 0.3 MPa, 0.4 MPa, 0.5 MPa, 0.6 MPa, etc., or other value within the range, which can be selected as actual need and is not limited herein.

In some embodiments, a jet milled product has a volume particle size distribution satisfying $1.0 \mu m \leq Dv10 \leq 2.5 \mu m$, $3.0 \mu m < Dv50 \leq 4.5 \mu m$, and $5.5 \mu m < Dv90 \leq 10.0 \mu m$.

In some embodiments, the grading is performed at a frequency of 80 Hz to 160 Hz. In some embodiments, the frequency for the grading may specifically be 80 Hz, 90 Hz, 100 Hz, 125 Hz, 140 Hz, 150 Hz, 160 Hz, etc., or other value within the range, which can be selected as actual need and is not limited herein. It can be understood that the frequency for the grading affects particle size of jet milled particles.

In some embodiments, in a particle size number distribution curve of the graded product, a distribution curve of particles with a particle size range of 1 $\mu m$ to 4 $\mu m$ has a peak meeting a Pulse function distribution, and the particles with the particle size range of 1 $\mu m$ to 4 $\mu m$ has a particle size distribution width represented as Span(a), which satisfies 0.8 < Span(a) < 1.64.

In some embodiments, in a particle size number distribution curve of the graded product, a distribution curve of particles with a particle size range of 0.1 $\mu m$ to 1 $\mu m$, excluding 1 $\mu m$, has a peak meeting a Voigt function distribution, and the particles with the particle size range of 0.1 $\mu m$ to 1 $\mu m$, excluding 1 $\mu m$, has a particle size distribution width represented as Span(b), which satisfies 0.4 < Span(b) < 0.8.

In some embodiments, the method further includes: mixing jet milled and graded product with a coating agent containing metallic M, and subjecting to a secondary sintering treatment to obtain the cathode material.

In some embodiments, a crushing method includes adopting at least one of a roller press, a plow blade mixer/crusher, and a jet mill.

In some embodiments, for the coating agent containing metallic M, M is selected from at least one of Zr, Mg, Ti, Ba, Sr, Cr, Zn, V, Cu, Nb, Mo, Y, and W. The coating agent containing metallic M is a salt or an oxide of the metallic M. In some embodiments, the coating agent containing metallic M includes a compound of Nb and/or a compound of W.

In some embodiments, the secondary sintering treatment is performed under an oxygen-containing atmosphere, where the oxygen-containing atmosphere has an oxygen content of $\geq 95\%$.

In some embodiments, the secondary sintering treatment is performed at a temperature of 300°C to 800°C, which may specifically be 300°C, 320°C, 330°C, 350°C, 380°C, 400°C, 450°C, 500°C, 550°C, 650°C, 700°C, or 800°C, etc., but is not limited to the recited values, and other non-recited value within the value range is also applicable.

In some embodiments, the secondary sintering treatment is performed for a heat preservation time of 6 h to 24 h, which may specifically be 6 h, 8 h, 10 h, 12 h, 15 h, 18 h, or 24 h, etc., but is not limited to the recited values, and other non-recited value within the value range is also applicable.

In some embodiments, when the coating agent containing metallic M includes the compound of Nb and/or the compound of W, the secondary sintering treatment is performed at a temperature of 500°C to 600°C for a heat preservation time of 6 h to 8 h.

In a fourth aspect, embodiments of the present disclosure provides a battery. The battery includes the cathode material according to the above first aspect, or a cathode material prepared by the above preparation method of a cathode material, or a cathode material prepared from the oxide precursor according to the above second aspect.

The battery provided by the present disclosure is a secondary battery (such as a lithium-ion battery, a sodium-ion battery, etc.), including a housing, an electrode assembly, and an electrolyte. Both the electrode assembly and the electrolyte are located within the housing. The housing is a packaging bag obtained by packaging with a packaging film (such as an aluminum-plastic film), for example, the secondary battery is a pouch battery.

In some other embodiments, the secondary battery may be a steel shell battery, an aluminum shell battery, etc.

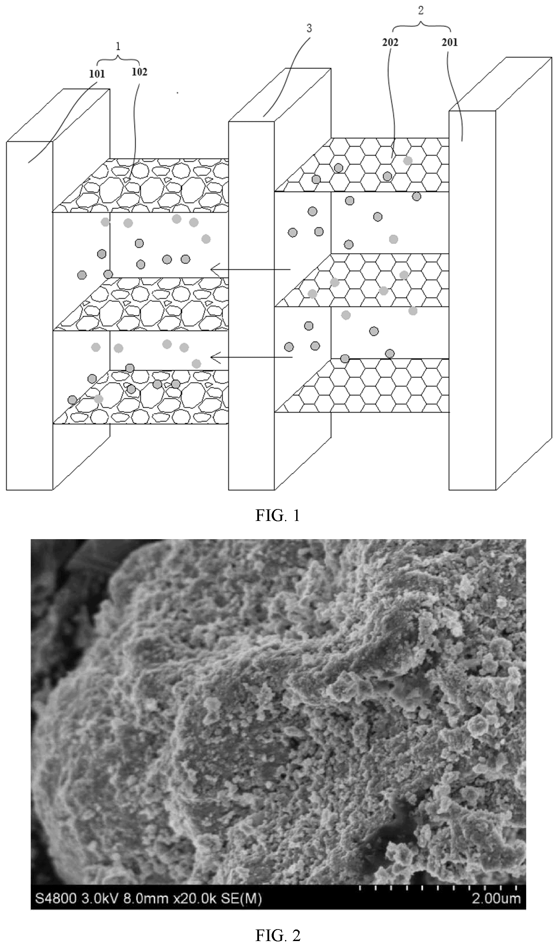

FIG. 1 is a schematic diagram of the battery provided by embodiments of the present disclosure in the discharging state. As shown in FIG. 1, the battery includes a housing and an electrode assembly. The electrode assembly incudes a cathode plate 1, an anode plate 2, and a separator 3. The separator 3 is provided between the cathode plate 1 and the anode plate 2. The electrode assembly has a laminated structure, which is formed by alternately stacking the cathode plate 1, the separator 3, and the anode plate 2 in sequence.

In some other embodiments, the electrode assembly has a wound structure, which is formed by stacking a cathode plate, a separator, and an anode plate in sequence and winding.

In some embodiments, the cathode plate 1 includes a cathode current collector 11 and a cathode active material layer 12 provided on at least one surface of the cathode current collector 11.

In some embodiments, the cathode current collector 11 adopts an aluminum foil or a nickel foil, etc., or any composite current collector reported by the prior art, for example, but not limited to, a current collector formed by combining the above conductive foil (aluminum foil or nickel foil, etc.) and a polymer substrate. The cathode active material layer 12 includes a cathode active material, a conductive agent, and a binder, where the cathode active material is the cathode material according to the first aspect or a cathode material prepared by the above preparation method of a cathode material.

In some embodiments, the anode plate 2 includes an anode current collector 21 and an anode active material layer 22 provided on at least one surface of the anode current collector.

In some embodiments, the anode current collector 21 adopts at least one of a copper foil, a nickel foil, a stainless steel foil, a titanium foil, or a carbon-based current collector, etc., or any composite current collector reported by the prior art, for example, but not limited to, a current collector formed by combining the above conductive foil and a polymer substrate.

In some embodiments, the anode active material layer 22 includes an anode material. The anode material includes, but is not limited to, artificial graphite, natural graphite, soft carbon, hard carbon, a silicon-based material, a tin-based material, and lithium titanate, etc. The silicon-based material is selected from at least one of elemental silicon, a silicon oxygen compound, a silicon-carbon composite, a silicon-nitrogen composite, and a silicon alloy. The tin-based material is selected from at least one of elemental tin, a tin oxygen compound, and a tin alloy. However, the present disclosure is not limited to these materials, and other traditional materials that can be used as an anode active material for a battery may also be adopted. These anode active materials may be adopted alone, or by combination of two or more.

The battery according to embodiments of the present disclosure possesses advantages of high capacity, high initial efficiency, long cycle life, excellent rate performance, and low expansion. The battery may be a lithium-ion battery, a sodium-ion battery, a solid-state electrolyte battery, etc., which is not limited herein.

The embodiments of the present disclosure are further described through several Examples below. The embodiments of the present disclosure are not limited to the following specific Examples. Within the scope that main claims are not changed, implementation may be arrived with appropriate modification.

**Test Method:**

**(1) Test of free anion of the cathode material**

About 0.7 g of a sample (recorded as M) is weighed into a 70 mL beaker with an accuracy to 0.0001 g.

50 mL of ultrapure water is accurately measured by a graduated cylinder. A little of ultrapure water (about 7 mL) is added to the sample, and stirred uniformly by a glass rod, and then the remaining ultrapure water is added. After stirring uniformly, ultrasonication is performed for 3 min, and the sample is allowed to stand for about 17 min for precipitation.

1 mL of supernatant (recorded as V) of the sample is drawn by a 1 mL sterile syringe, and is injected into an instrument through a disposable filter head for testing. The model of the ion chromatograph is Thermo Scientific Dionex ICS-6000. The chromatographic conditions are that: eluent concentration: 25 mmol/L; eluent flow rate: 0.3 mL/min; column temperature: $30\pm1°C$; detector cell temperature: $35\pm1°C$; suppressor current: 26 mA; and chromatographic column: anion exchange column (4*250 mm, AS11-HC). Data acquisition: after stability of the baseline (the variation of signal value is less than 0.1 $\mu$S/20 min), data acquisition is clicked, and analysis starts.

After the analysis is completed, the free anion content corresponding to element 1 is obtained by result calculation completed by the automatic conversion via the testing software embedded in the instrument based on the analyzed concentration of element i (recorded as Ci). The calculation formula is $Q = Ci * V * 50 / M$, where Q is the content of element i in the sample (mg/kg); Ci is the concentration of element i in the sample solution (mg/L); V is the volume of the sample solution (mL); and M is the mass of the sample (g). Specifically, in the anion test, by measuring the content of element N, the content of nitrate radical $NO_3^-$ can be calculated based on its ion molecular weight, which is automatically completed by the testing software embedded in the instrument. Similarly, by measuring the content of element S, the content of sulfate radical $SO_4^{2-}$ can be calculated based on its ion molecular weight.

(2) characterization of the particle size number distribution and volume distribution of the cathode material through Mastersizer 3000. The method is as follows:

The testing method of particle size refers to GB/T 19077-2016. A laser particle size analyzer can be used for the testing conveniently, such as the Mastersizer 3000 laser particle size analyzer purchased from Malvern Instruments Ltd., UK.

Particle size number distribution data of the cathode material are exported, points with a minimum quantity proportion on two sides of first peak are selected as a starting point and an end point, data between the starting point and the end point of the first peak are imported into Origin software, a particle size distribution width graph of the second characteristic peak is obtained through Gaussian fitting, and then $D90_{p1}$, $D10_{p1}$, and $D50_{p1}$ of the particle size distribution width of the second characteristic peak are obtained, where $D90_{p1}$ represents a particle size corresponding to a cumulative particle size number distribution in the second characteristic peak reaching 90%, $D50_{p1}$ represents a particle size corresponding to the cumulative particle size number distribution in the second characteristic peak reaching 50%, and $D10_{p1}$ represents a particle size corresponding to the cumulative particle size number distribution in the second characteristic peak reaching 10%. Points with a minimum quantity proportion on two sides of the first characteristic peak are selected as a starting point and an end point, data between the starting point and the end point of the first characteristic peak are imported into Origin software, a particle size distribution width graph of the first characteristic peak is obtained through Gaussian fitting, and then $D90_{p2}$, $D10_{p2}$, and $D50_{p2}$ are obtained, where $D90_{p2}$ represents a particle size corresponding to a cumulative particle size number distribution in the first characteristic peak reaching 90%, $D50_{p2}$ represents a particle size corresponding to the cumulative particle size number distribution in the first characteristic peak reaching 50%, and $D10_{p2}$ represents a particle size corresponding to the cumulative particle size number distribution in the first characteristic peak reaching 10%.

In the particle size number distribution curve of the cathode material, particle size distribution width functions Span(a) and Span(b) of the two characteristic peaks are respectively expressed as:

$$Span(a) = \frac{D90_{p1} - D10_{p1}}{D50_{p1}} \tag{3}$$

where $D90_{p1}$, $D10_{p1}$, and $D50_{p1}$ are respectively particle size proportion parameters of the second characteristic peak with x ranging from 1 $\mu$m to 4 $\mu$m;

$$Span(b) = \frac{D90_{p2} - D10_{p2}}{D50_{p2}}$$

(4)

where $D90_{p2}$, $D10_{p2}$, and $D50_{p2}$ are respectively particle size quantity proportion parameters of the first characteristic peak with x ranging from 0.1 $\mu$m to 1 $\mu$m.

A laser particle size analyzer can be used for testing volume-based cumulative particle size distribution conveniently, such as the Mastersizer 3000 laser particle size analyzer purchased from Malvern Instruments Ltd., UK. Dv10 represents a particle size corresponding to a cumulative particle size distribution percentage of powder reaching 10%, Dv50 represents a particle size corresponding to the cumulative particle size distribution percentage reaching 50%, and Dv90 represents a particle size corresponding to the cumulative particle size distribution percentage reaching 90%.

Specifically, a certain amount of a sample is taken to pure water for ultrasonic dispersion with an ultrasonic power of 240 W for 30 s. The dispersed sample is dropped with a certain amount of sodium hexametaphosphate and stirred uniformly, and then placed into a sample cell of the detection equipment. The sample testing is started after waiting for 10 s.

### (3) Test of specific surface area of the cathode material:

The specific surface area is tested for the cathode material by using a Micromeritics TriStar 3020 specific surface area and pore size analyzer. A certain mass of powder is weighed and degassed completely under a vacuum and heating to remove surface adsorbate. The specific surface area ($m^2/g$) of particles is calculated based on an amount of adsorbed nitrogen through a nitrogen adsorption method.

Specifically, 1) a total mass of an empty sample tube is weighed as m1; 3 g ($\pm$0.005) of a sample is taken and added into the sample tube; the sample tube containing the sample is vacuum degassed at 300°C for 1 h, and after cooling, a total mass of the sample tube and the sample is weighed as m2; thus a mass of the sample is m = m2 - m1. The sample tube is placed in liquid nitrogen, and a nitrogen adsorption capacity V of the sample is measured under 6 relative pressures P/P0 to obtain an adsorption isotherm, where P/P0 is set as 0.05/0.1/0.15/0.20/0.25/0.30. A monolayer saturated adsorption capacity Vm is obtained based on the adsorption isotherm, and the specific surface area of the cathode material is calculated based on Vm.

### (4) Test of Quantachrome tap density of the cathode material

A Quantachrome tap density tester (Model: DAT-4-220) is used, and steps are as follows:

1. a measuring cylinder is cleaned, and a mass of the measuring cylinder is weighed as m1;
2. about 50 g of a sample is added into the measuring cylinder, a surface of the sample is made to be horizontal as much as possible, and a surrounding area is wiped with a paper towel;
3. a total mass of the sample and the measuring cylinder is weighed as m2;
4. the measuring cylinder is placed on a vibration platform and fixed with symmetrical three fixing feet;
5. the instrument is turned on, vibration number is set as 5000 times, and then a vibration switch is turned on. The instrument vibrates until the set times for automatic stop;
6. the measuring cylinder is taken out, and a volume of the sample is recorded. When the surface of the tapped sample is horizontal, the volume is recorded directly; while when it is inclined, an average value V of the highest point and the lowest point is taken; where Tap density = (m2 - m1) / V.

### (5) Test of compact density of the cathode material

The compact density of the cathode material is tested by using a Carver 4350, USA, the steps are that: 1 g of a sample is weighed and placed into a mold, and subjected to a pressure of 3 T for 30 s. After pressing, the compact density is calculated by measuring the height.

### (6) Test of bulk density of the cathode material

The compact density of the cathode material is tested by using a BT-101 bulk density tester, the steps are that: a certain amount of a sample is taken and allowed to flow naturally into the funnel box to pass alternately through four glass plates with an inclination angle of 25° and a square funnel which are in the funnel box to flow into a cylindrical cup with a known volume (25 mL), and then a mass of powder in the cylindrical cup is weighed.

**(7) ICP test of the cathode material**

0.3 g of a sample to be tested is taken and dissolved with aqua regia, cooled and adjusted to 100 mL to prepare a test mother liquor; 1 mL of the test mother liquor is taken, and measured by an Agilent 5110 ICP-OES equipment to obtain a mass content of a doping element; after 100-fold dilution, contents of main elements Li, Ni, Co, and Mn are measured by the Agilent 5110 ICP-OES equipment. The test is performed always by using the Agilent 5110 ICP-OES detection equipment.

**(8) Test of average particle size of crystal grains of the cathode material**

A Hitachi S4800 scanning electron microscope is used to randomly capture 5 images of the sample at different positions under 3000x magnification. A maximum diameter of single-crystal particles that completely appear in the visual field of the SEM photos is measured by the Nano Measure software, and an average value of which is calculated as the average particle size of the crystal grains. The single-crystal particles that completely appear in the visual field of the SEM photos refers to a single-crystal particle whose contour is completely shown in the SEM photo, and the contour of the single-crystal particle is not covered by other single-crystal particle in the visual field or not divided by boundaries of the SEM photo. The maximum diameter of a single-crystal particle refers to a diameter of a circumscribed circle of the single-crystal particle in the SEM photo.

**(9) Test of electrochemical performance**

a. preparation of a sample for the test of electrochemical performance
preparation of a button battery:

preparation of raw materials: NCM:SP:5% of polyvinylidene fluoride (PVDF) adhesive = 93:5:2 = 9.3 g : 0.5 g : 4.0 g, NMP = 9 g, which are stirred at high speed for dispersing uniformly;
coating and drying: a slurry is coated uniformly on an aluminum foil with a thickness of 20 $\mu$m by using a 210 $\mu$m coating machine, a coating length is set as a maximum length of the coating machine, a latter half section of a plate is cut and placed into a blast drying oven at 100°C for drying for 1.5 h or more;
rolling, punching, and drying: a roller press is adjusted to 1 roller gap for rolling for 3 times; a 14 mm punching machine is used for punching; after weighing, the sample is placed into a vacuum drying oven for vacuum drying at 85°C for 8 h or more; and
button battery (LIR2016) assembly: cathode shell - 2 drops of electrolyte - cathode plate (14 mm) - 3 drops of electrolyte - 20 $\mu$m separator - 2 drops of electrolyte - $\varphi$16*1.0 mm lithium plate - 150 $\mu$m nickel foam - anode shell (dried at 50°C), which are assembled to a battery, then sealed, and taken out from a glove box for testing.

b. test of the button battery:
after standing for 12 h, battery testing is performed as follows:

charging at 0.1C and discharging at 0.1C are performed for two cycles, with a charging cut-off voltage of 4.45 V, a discharging cut-off voltage of 2.5 V, and a constant voltage cut-off current of 0.005C, to measure an initial cycle capacity, a discharge specific capacity, and an initial coulombic efficiency.
charging at 0.5C and discharging at 1C are performed for 50 cycles, with a charging cut-off voltage of 4.45 V, a discharging cut-off voltage of 2.5 V, and a constant voltage cut-off current of 0.05C, and a ratio of the measured capacity and the initial cycle capacity is recorded as a high-voltage cycling capacity retention rate after 50 cycles.

The test results are shown in Table 1.

**(10) XPS characterization of the cycled cathode material**

After the button battery prepared by above test (10) is subjected to charging at 0.1C and discharging at 0.1C for one cycle, the cathode plate is taken out, powder on a surface of the cathode plate is scrapped off by using a scraper, and the scraped powder is characterized by using an XPS spectrometer, to obtain an XPS spectrum. The XPS spectroscopy equipment is a Thermo Scientific K-Alpha X-ray photoelectron spectrometer.

**Example 1**

(1) Metallic nickel, metallic manganese, and metallic cobalt were respectively dissolved in sulfuric acid to form sulfate solutions, the three solutions were prepared in a stoichiometric ratio of Ni:Co:Mn = 60:10:30 to obtain a mixed solution with a total concentration of Ni, Co, and Mn of 2 mol/L. The mixed solution was fed continuously with a NaOH solution with a concentration of 1 mol/L and an aqueous ammonia with a concentration of 0.5 mol/L to keep the pH value within a range of 11±0.2. When Dv50 reached 8 $\mu$m, the reaction was stopped, and the precipitate was centrifuged, washed and dried, to obtain a hydroxide precursor of cathode material.

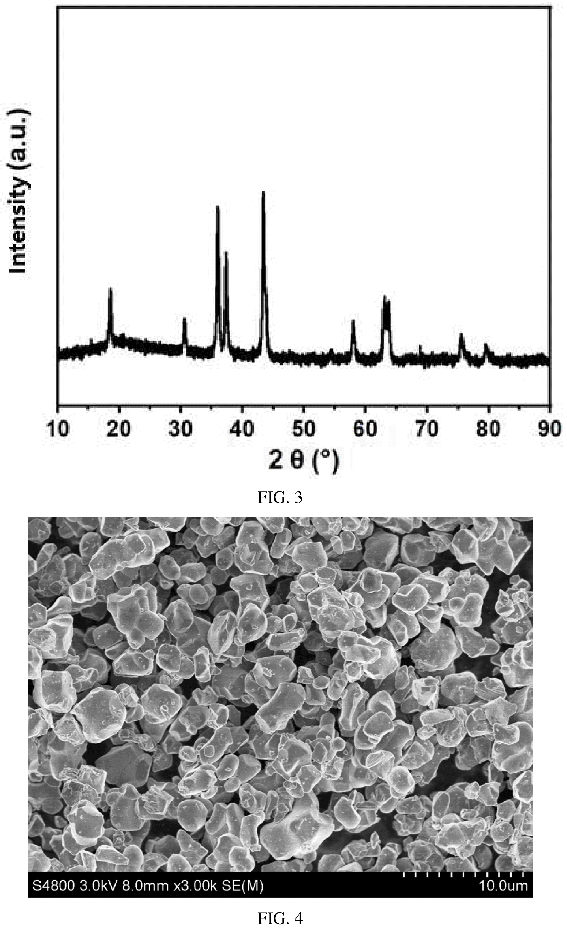

(2) The hydroxide precursor of cathode material was placed in an atmosphere with a nitric acid concentration of 2% (in the atmosphere, only $HNO_3$ and $H_2O$ were contained, and a content of $O_2$ was < 1.0 ppm), and subjected to a nitration and annealing treatment during which the precursor was heated to a temperature of 600°C in a heating rate of 2°C/min and held at this temperature for 6 h for annealing, to obtain an oxide precursor with a chemical formula of $Ni_{0.6}Co_{0.1}Mn_{0.3}O_x$ (with a content deviation of each element within ±1%), where during the annealing, an ambient pressure of the reaction was controlled to at 3.0 kPa. FIG. 2 is a SEM image of the oxide precursor of the cathode material prepared by Example 1 of the present disclosure, and FIG. 3 is an XRD pattern of the oxide precursor of the cathode material prepared by Example 1 of the present disclosure. As shown in FIG. 2 and FIG. 3, there are each one characteristic peak of the oxide precursor at 35.4°±1° and 43.3°±1°, respectively.

(3) The oxide precursor and $Li_2CO_3$ were mixed in a molar ratio of Li/Me (Me was a sum of Ni, Co, and Mn) of 1.02:1, added $ZrO_2$ to a mass content of 2000 ppm relative to the oxide precursor, and subjected to a primary sintering treatment under an oxygen atmosphere with a reaction pressure controlled at 10 Pa in an atmospheric electric furnace or a Joule heating reactor, to obtain a primary sintering product, where the primary sintering treatment included: a first heating stage including heating from room temperature to 500°C at a heating rate of 20°C/min and holding at this temperature for 4 h; a second heating stage including heating to 700°C at a heating rate of 2°C/min and holding at this temperature for 6 h; a first cooling stage including cooling to 500°C at a cooling rate of 1°C/min and holding at this temperature for 4 h; a third heating stage including heating to 900°C at a heating rate of 1°C/min and holding at this temperature for 2 h; and cooling from the fourth platform temperature to room temperature at a cooling rate of 2°C/min.

(4) The primary sintering product was jet milled at a pressure controlled at 0.55 MPa and graded with a frequency controlled at 120 Hz, to obtain a matrix material with volume distribution particle sizes Dv10 of 1.86 $\mu$m, Dv50 of 3.73 $\mu$m, and Dv90 of 7.62 $\mu$m.

(5) The matrix material was mixed with 1000 ppm of $Nb_2O_5$, and subjected to a secondary sintering at 500°C for 6 h under an oxygen atmosphere, to obtain the cathode material.

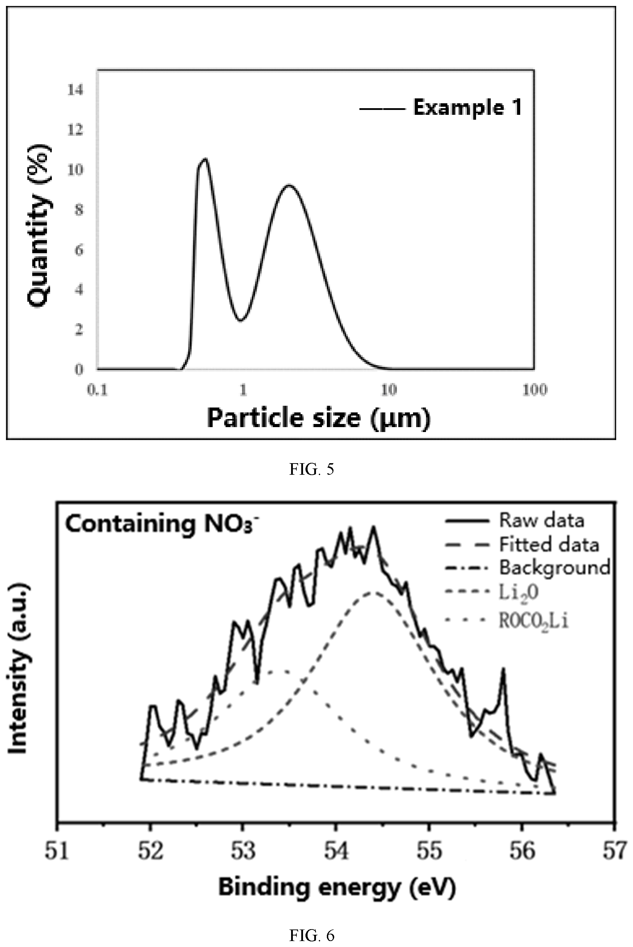

The cathode material prepared in Example 1 of the present disclosure is $Li_{1.02}Ni_{0.6}Co_{0.1}Mn_{0.297}Zr_{0.002}Nb_{0.001}O_2$. FIG. 4 is a SEM image of the cathode material prepared by Example 1 of the present disclosure, and FIG. 5 is a particle size number distribution curve of the cathode material prepared by Example 1 of the present disclosure. As shown in FIG. 4 and FIG. 5, the cathode material particles are dispersed, and have two characteristic peaks in the particle size number distribution curve. FIG. 6 is an XPS spectrum of element Li on a surface of the cathode material prepared by Example 1 of the present disclosure after charging and discharging for one cycle. After assembling the cathode material into a battery and charging and discharging for one cycle, as shown in FIG. 6, there is much $Li_2O$ phase on the surface of the cathode material, which is beneficial to cycling stability of the cathode material.

**Example 2**

(1) Metallic nickel, metallic manganese, and metallic cobalt were respectively dissolved in sulfuric acid to form sulfate solutions, the three solutions were prepared in a stoichiometric ratio of Ni:Co:Mn = 67:5:28 to obtain a mixed solution with a total concentration of Ni, Co, and Mn of 2 mol/L. The mixed solution was added certain amounts of citric acid and ethylene glycol to keep the pH value within a range of 8 to 10, and then placed in a reaction kettle and maintained at 180°C for 24 h to obtain a precipitate, and the precipitate was centrifuged, washed and dried, to obtain a hydroxide precursor of cathode material.

(2) The hydroxide precursor of cathode material was placed in an atmosphere with a nitric acid concentration of 2% (in the atmosphere, only $HNO_3$ and $H_2O$ were contained, and a content of $O_2$ was < 1.0 ppm), and subjected to a nitration and annealing treatment during which the precursor was heated to a temperature of 600°C in a heating rate of 2°C/min and held at this temperature for 6 h for annealing, to obtain an oxide precursor with a chemical formula of $Ni_{0.67}Co_{0.05}Mn_{0.28}O_x$ (with a content deviation of each element within ±1%), where during the annealing, an ambient pressure of the reaction was controlled to at 3.0 kPa.

(3) The oxide precursor and $Li_2CO_3$ were mixed in a molar ratio of Li/Me (Me was a sum of Ni, Co, and Mn) of 1.01:1, added $TiO_2$ to a mass content of 1000 ppm relative to the oxide precursor, and subjected to a primary sintering treatment which is the same as step (3) of Example 1.

(4) The primary sintering product was jet milled at a pressure controlled at 0.4 MPa and graded with a frequency controlled at 130 Hz, to obtain a matrix material with volume distribution particle sizes Dv10 of 1.67 $\mu$m, Dv50 of 3.58 $\mu$m, and Dv90 of 6.89 $\mu$m.

(5) The crushed matrix material was mixed with 1500 ppm of $Al_2O_3$, and subjected to a secondary sintering at 500°C for 6 h under an oxygen atmosphere, to obtain the cathode material.

## Example 3

This Example was performed by the same way as Example 1, excepting that:

(2) The hydroxide precursor of cathode material was placed in an atmosphere with a nitric acid concentration of 3% (in the atmosphere, only $HNO_3$ and $H_2O$ were contained, and a content of $O_2$ was < 1.0 ppm), and subjected to a nitration and annealing treatment during which the precursor was heated to a temperature of 200°C in a heating rate of 3°C/min and held at this temperature for 3 h for annealing, to obtain an oxide precursor with a chemical formula of $Ni_{0.6}Co_{0.1}Mn_{0.3}O_x$ (with a content deviation of each element within $\pm1\%$), where during the annealing, an ambient pressure of the reaction was controlled to at 2.0 kPa.

## Example 4

This Example was performed by the same way as Example 1, excepting that:

(3) The oxide precursor and $Li_2CO_3$ were mixed in a molar ratio of Li/Me (Me was a sum of Ni, Co, and Mn) of 1.02:1, added $ZrO_2$ to a mass content of 2000 ppm relative to the oxide precursor, and subjected to a primary sintering treatment under an oxygen atmosphere with a reaction pressure controlled at 10 Pa in an atmospheric electric furnace or a Joule heating reactor, to obtain a primary sintering product, where the primary sintering treatment included: a first heating stage including heating from room temperature to 300°C at a heating rate of 20°C/min and holding at this temperature for 5 h; a second heating stage including heating to 900°C at a heating rate of 2°C/min and holding at this temperature for 4 h; a first cooling stage including cooling to 600°C at a cooling rate of 1°C/min and holding at this temperature for 6 h; a third heating stage including heating to 700°C at a heating rate of 0.5°C/min and holding at this temperature for 6 h; and cooling from the fourth platform temperature to room temperature at a cooling rate of 1°C/min.

## Example 5

(1) Metallic nickel, metallic manganese, and metallic cobalt were respectively dissolved in nitric acid to form nitrate solutions, the three solutions were prepared in a stoichiometric ratio of Ni:Co:Mn = 90:5:5 to obtain a mixed solution with a total concentration of Ni, Co, and Mn of 2 mol/L. The mixed solution was added certain amounts of citric acid and ethylene glycol to keep the pH value within a range of 7 to 9, and then placed in a reaction kettle and maintained at 180°C for 24 h to obtain a precipitate, and the precipitate was centrifuged, washed and dried, to obtain a hydroxide precursor of cathode material.

(2) The hydroxide precursor of cathode material was placed in an atmosphere with a nitric acid concentration of 1% (in the atmosphere, only $HNO_3$ and $H_2O$ were contained, and a content of $O_2$ was < 1.0 ppm), and subjected to a nitration and annealing treatment during which the precursor was heated to a temperature of 800°C in a heating rate of 0.5°C/min and held at this temperature for 10 h for annealing, to obtain an oxide precursor with a chemical formula of $Ni_{0.9}Co_{0.05}Mn_{0.05}O_x$ (with a content deviation of each element within $\pm1\%$), where during the annealing, an ambient pressure of the reaction was controlled to at 2.0 kPa.

(3) The oxide precursor and $Li_2CO_3$ were mixed in a molar ratio of Li/Me (Me was a sum of Ni, Co, and Mn) of 1.02:1, added $ZrO_2$ to a mass content of 2000 ppm relative to the oxide precursor, and subjected to a primary sintering treatment under an oxygen atmosphere with a reaction pressure controlled at 10 Pa in an atmospheric electric furnace or a Joule heating reactor, to obtain a primary sintering product, where the primary sintering treatment included: a first heating stage including heating from room temperature to 300°C at a heating rate of 20°C/min and holding at this temperature for 5 h; a second heating stage including heating to 800°C at a heating rate of 2°C/min and holding at this temperature for 4 h; a first cooling stage including cooling to 500°C at a cooling rate of 1°C/min and holding at this temperature for 6 h; a third heating stage including heating to 600°C at a heating rate of 0.5°C/min and holding at this temperature for 6 h; and cooling from the fourth platform temperature to room temperature at a cooling rate of 1°C/min.

(4) The primary sintering product was jet milled at a pressure controlled at 0.55 MPa and graded with a frequency controlled at 120 Hz, to obtain a matrix material with volume distribution particle sizes Dv10 of 1.86 $\mu$m, Dv50 of 3.73 $\mu$m, and Dv90 of 7.62 $\mu$m.

(5) The matrix material was mixed with 1000 ppm of $Nb_2O_5$, and subjected to a secondary sintering at 500°C for 6 h under an oxygen atmosphere, to obtain the cathode material.

**Example 6**

This Example was performed by the same way as Example 4, excepting that:

(3) The oxide precursor and $Li_2CO_3$ were mixed in a molar ratio of Li/Me (Me was a sum of Ni, Co, and Mn) of 0.99:1, added $ZrO_2$ to a mass content of 2000 ppm relative to the oxide precursor, and subjected to a primary sintering treatment under an oxygen atmosphere with a reaction pressure controlled at 10 Pa in an atmospheric electric furnace or a Joule heating reactor, to obtain a primary sintering product, where the primary sintering treatment included: a first heating stage including heating from room temperature to 300°C at a heating rate of 20°C/min and holding at this temperature for 5 h; a second heating stage including heating to 900°C at a heating rate of 2°C/min and holding at this temperature for 4 h; a first cooling stage including cooling to 600°C at a cooling rate of 1°C/min and holding at this temperature for 6 h; a third heating stage including heating to 700°C at a heating rate of 0.5°C/min and holding at this temperature for 6 h; and cooling from the fourth platform temperature to room temperature at a cooling rate of 1°C/min.

**Example 7**

This Example was performed by the same way as Example 4, excepting that:

(1) Metallic nickel, metallic manganese, and metallic cobalt were respectively dissolved in nitric acid to form nitrate solutions, the three solutions were prepared in a stoichiometric ratio of Ni:Co:Mn = 83:11:06 to obtain a mixed solution with a total concentration of Ni, Co, and Mn of 2 mol/L.

**Example 8**

This Example was performed by the same way as Example 4, excepting that:

(1) Metallic nickel, metallic manganese, and metallic cobalt were respectively dissolved in sulfuric acid to form sulfate solutions, the three solutions were prepared in a stoichiometric ratio of Ni:Co:Mn = 70:10:20 to obtain a mixed solution with a total concentration of Ni, Co, and Mn of 2 mol/L.

**Example 9**

This Example was performed by the same way as Example 4, excepting that:

(1) Metallic nickel and metallic cobalt were respectively dissolved in sulfuric acid to form sulfate solutions, the two solutions were prepared in a stoichiometric ratio of Ni:Co = 90:10 to obtain a mixed solution with a total concentration of Ni and Co of 2 mol/L.

**Example 10**

This Example was performed by the same way as Example 4, excepting that:

(1) Metallic nickel and metallic manganese were respectively dissolved in sulfuric acid to form sulfate solutions, the two solutions were prepared in a stoichiometric ratio of Ni:Mn = 90:10 to obtain a mixed solution with a total concentration of Ni and Mn of 2 mol/L.

**Example 11**

This Example was performed by the same way as Example 2, excepting that:

(2) The hydroxide precursor of cathode material was placed in an atmosphere with a nitric acid concentration of 2% (in the atmosphere, only $HNO_3$ and $H_2O$ were contained, and a content of $O_2$ was < 1.0 ppm), and subjected to a nitration and annealing treatment during which the precursor was heated to a temperature of 400°C in a heating rate of 2°C/min and held at this temperature for 3 h for annealing, to obtain an oxide precursor with a chemical formula of $Ni_{0.67}Co_{0.05}Mn_{0.28}O_x$ (with

a content deviation of each element within ±1%), where during the annealing, an ambient pressure of the reaction was controlled to at 3.0 kPa.

**Example 12**

This Example was performed by the same way as Example 1, excepting that:
(4) The primary sintering product was jet milled at a pressure controlled at 0.35 MPa and graded with a frequency controlled at 60 Hz, to obtain a matrix material with volume distribution particle sizes Dv10 of 2.23 $\mu$m, Dv50 of 4.42 $\mu$m, and Dv90 of 8.87 $\mu$m.

**Example 13**

This Example was performed by the same way as Example 1, excepting that:

(1) Metallic nickel, metallic manganese, and metallic aluminum were respectively dissolved in sulfuric acid to form sulfate solutions, the three solutions were prepared in a stoichiometric ratio of Ni:Co:Al = 80:15:5 to obtain a mixed solution with a total concentration of Ni, Co, and Al of 2 mol/L. The mixed solution was fed continuously with a NaOH solution with a concentration of 1 mol/L and an aqueous ammonia with a concentration of 0.5 mol/L to keep the pH value within a range of 10.8 to 11.2. When Dv50 reached 8 $\mu$m, the reaction was stopped, and the precipitate was centrifuged, washed and dried, to obtain a hydroxide precursor of cathode material.

**Example 14**

This Example was performed by the same way as Example 1, excepting that:
(4) The primary sintering product was jet milled at a pressure controlled at 0.5 MPa and graded with a frequency controlled at 170 Hz, to obtain a matrix material with volume distribution particle sizes Dv10 of 0.86 $\mu$m, Dv50 of 2.73 $\mu$m, and Dv90 of 5.62 $\mu$m.

**Example 15**

This Example was performed by the same way as Example 1, excepting that:
(4) The primary sintering product was jet milled at a pressure controlled at 0.25 MPa and graded with a frequency controlled at 70 Hz, to obtain a matrix material with volume distribution particle sizes Dv10 of 2.66 $\mu$m, Dv50 of 4.95 $\mu$m, and Dv90 of 9.83 $\mu$m.

**Comparative Example 1**

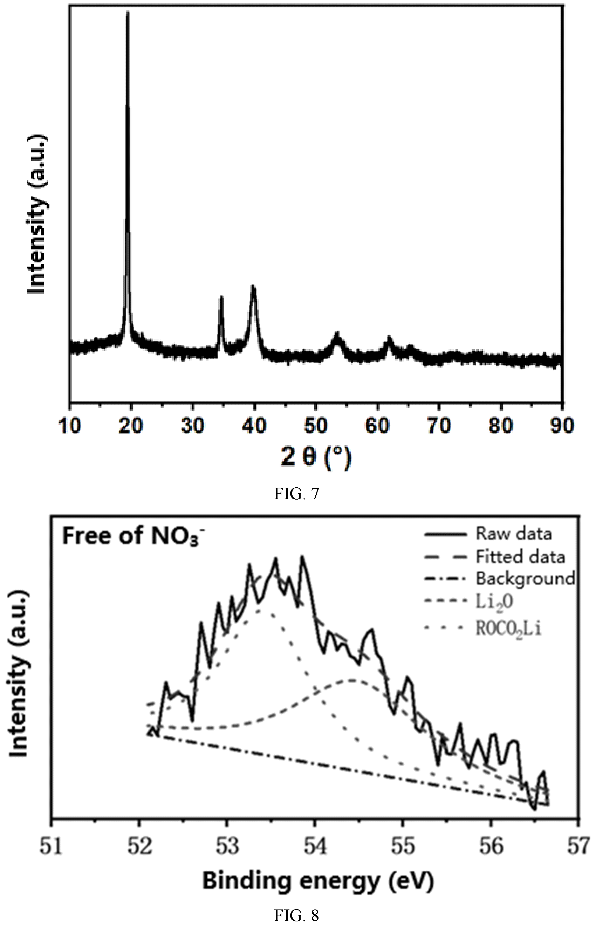

This Comparative Example was performed by the same way as Example 1, excepting that:
(2) A hydroxide precursor $Ni_{0.6}Co_{0.1}Mn_{0.3}(OH)_x$ of cathode material was heated to a temperature of 200°C in a heating rate of 3°C/min and held at this temperature for 3 h for annealing, to obtain an oxide precursor with a chemical formula of $Ni_{0.6}Co_{0.1}Mn_{0.3}O_x$ (with a content deviation of each element within ±1%). Its XRD result is shown in FIG. 7.
The cathode material prepared in this Comparative Example does not contain free nitrate radical since no nitration treatment was performed. FIG. 8 is an XPS spectrum of Li element on a surface of the cathode material prepared by Comparative Example 1 of the present disclosure after charging and discharging for one cycle. After assembling the cathode material into a battery and charging and discharging for one cycle, as shown in FIG. 8, there is only a little $Li_2O$ phase on the surface of the cathode material, which is not beneficial to cycling stability of the cathode material.

**Comparative Example 2**

This Comparative Example was performed by the same way as Example 5, excepting that:
(2) A hydroxide precursor $Ni_{0.9}Co_{0.05}Mn_{0.05}(OH)_x$ of cathode material was heated to a temperature of 800°C in a heating rate of 0.5°C/min and held at this temperature for 10 h for annealing, to obtain an oxide precursor with a chemical formula of $Ni_{0.9}Co_{0.05}Mn_{0.05}O_x$ (with a content deviation of each element within ±1%), where during the annealing, an ambient pressure of the reaction was controlled to at 2.0 kPa.

**Comparative Example 3**

This Comparative Example was performed by the same way as Example 2, excepting that:

(2) A hydroxide precursor $Ni_{0.67}Co_{0.05}Mn_{0.28}(OH)_x$ of cathode material was heated to a temperature of 600°C in a heating rate of 2°C/min and held at this temperature for 6 h for annealing, to obtain an oxide precursor with a chemical formula of $Ni_{0.67}Co_{0.05}Mn_{0.28}O_x$ (with a content deviation of each element within $\pm 1\%$).

**Comparative Example 4**

This Comparative Example was performed by the same way as Example 1, excepting that:
(2) The hydroxide precursor of cathode material was placed in an atmosphere with a nitric acid concentration of 2% (in the atmosphere, only $HNO_3$ and $H_2O$ were contained, and a content of $O_2$ was < 1.0 ppm), and subjected to a nitration and annealing treatment during which the precursor was heated to a temperature of 100°C in a heating rate of 2°C/min and held at this temperature for 2 h for annealing, to obtain an oxide precursor, where during the annealing, an ambient pressure of the reaction was controlled to at 3.0 kPa.

Table 1: table of comparison of the cathode materials of Examples and Comparative Examples

| No. | $NO_3$ (ppm) | $SO_4^2$ (ppm) | Span (a) | Span (b) | X | Dv10 (um) | Dv50 (um) | Dv90 (um) | Average particle size of crystal grains ($\mu m$) | Specific surface area ($m^2/g$) | Tap density ($g/cm^3$) | Compact density ($g/cm^3$) | Bulk density ($g/cm^3$) |
|---|---|---|---|---|---|---|---|---|---|---|---|---|---|
| S1 | 67 | 661 | 1.54 | 0.43 | 1.6 | 1.86 | 3.73 | 7.62 | 2.17 | 1.12 | 1.93 | 3.09 | 0.89 |
| S2 | 30 | 585 | 1.46 | 0.48 | 1.8 | 1.67 | 3.58 | 6.89 | 2.09 | 1.09 | 1.88 | 3.21 | 0.99 |
| S3 | 56 | 787 | 1.61 | 0.62 | 1.9 | 1.74 | 3.61 | 7.54 | 1.78 | 1.34 | 1.67 | 2.78 | 0.95 |
| S4 | 98 | 788 | 1.44 | 0.63 | 1.7 | 2.01 | 4.24 | 8.12 | 1.56 | 1.47 | 2.33 | 2.97 | 1.10 |
| S5 | 13 | 452 | 0.82 | 0.79 | 2.2 | 2.34 | 4.57 | 6.09 | 4.33 | 0.62 | 2.35 | 2.85 | 1.16 |
| S6 | 25 | 678 | 1.09 | 0.58 | 1.8 | 2.11 | 4.46 | 6.97 | 2.01 | 0.83 | 1.62 | 3.31 | 0.87 |
| S7 | 47 | 562 | 0.96 | 0.60 | 1.7 | 2.45 | 3.45 | 5.76 | 3.62 | 0.59 | 2.01 | 3.29 | 0.92 |
| S8 | 33 | 513 | 1.14 | 0.49 | 1.9 | 1.93 | 4.32 | 6.85 | 2.45 | 0.76 | 2.22 | 3.08 | 1.03 |
| S9 | 80 | 588 | 1.63 | 0.78 | 1.8 | 1.56 | 3.34 | 7.00 | 1.98 | 0.98 | 2.35 | 3.16 | 1.15 |
| S10 | 59 | 643 | 1.47 | 0.62 | 1.7 | 1.85 | 3.81 | 7.45 | 1.83 | 1.09 | 2.40 | 3.12 | 1.22 |
| S11 | 71 | 717 | 1.36 | 0.55 | 1.6 | 1.77 | 3.78 | 6.91 | 1.92 | 1.01 | 1.76 | 3.00 | 0.90 |
| S12 | 62 | 709 | 1.52 | 0.60 | 2.0 | 2.30 | 4.43 | 9.03 | 2.07 | 1.21 | 1.95 | 2.99 | 1.28 |
| S13 | 71 | 622 | 1.42 | 0.49 | 2.4 | 1.95 | 4.14 | 7.83 | 2.26 | 1.03 | 1.88 | 3.05 | 0.90 |
| S14 | 65 | 653 | 1.74 | 0.43 | 2.2 | 1.73 | 3.24 | 7.37 | 1.82 | 1.63 | 2.55 | 3.17 | 1.00 |
| S15 | 58 | 724 | 1.45 | 0.32 | 1.9 | 1.92 | 3.99 | 7.71 | 2.35 | 0.89 | 2.13 | 3.25 | 0.94 |
| D1 | 0 | 875 | 1.43 | 0.60 | 1.5 | 1.55 | 4.10 | 7.41 | 2.33 | 1.31 | 2.10 | 3.08 | 0.72 |
| D2 | 0 | 1048 | 1.24 | 0.56 | 1.4 | 1.23 | 2.98 | 4.93 | 2.58 | 0.99 | 2.11 | 2.84 | 0.89 |
| D3 | 0 | 983 | 0.90 | 0.51 | 1.2 | 1.55 | 3.71 | 4.89 | 2.90 | 0.79 | 1.66 | 2.91 | 1.09 |
| D4 | 58 | 625 | 1.32 | / | / | 2.07 | 4.13 | 7.52 | 2.38 | 0.95 | 1.85 | 2.97 | 0.87 |

An electrochemical test was performed on the button batteries containing the cathode materials, and the test results are shown in Table 2 below.

Table 2: table of performance comparison of the batteries corresponding to Examples and Comparative Examples

| No. | Chemical formula of the cathode material | Discharge specific capacity ( mAh/g) | Initial Coulombic efficiency ( %) | (25°C) high-voltage cycling capacity retention rate after 50 cycles (%) |
|---|---|---|---|---|
| Example 1 | $Li_{1.02}Ni_{0.6}Co_{0.1}Mn_{0.297}Zr_{0.002}Nb_{0.001}O_2$ | 203.4 | 90.0 | 96.7 |
| Example 2 | $Li_{1.01}Ni_{0.67}Co_{0.05}Mn_{0.274}Ti_{0.002}Al_{0.004}O_2$ | 209.1 | 90.3 | 96.3 |
| Example 3 | $Li_{1.02}Ni_{0.6}Co_{0.1}Mn_{0.297}Zr_{0.002}Nb_{0.001}O_2$ | 203.1 | 90.1 | 96.5 |
| Example 4 | $Li_{1.02}Ni_{0.6}Co_{0.1}Mn_{0.297}Zr_{0.002}Nb_{0.001}O_2$ | 202.6 | 90.4 | 97.1 |
| Example 5 | $Li_{1.02}Ni_{0.9}Co_{0.05}Mn_{0.046}Zr_{0.002}Nb_{0.002}O_2$ | 227.8 | 91.0 | 95.7 |
| Example 6 | $Li_{0.99}Ni_{0.6}Co_{0.1}Mn_{0.297}Zr_{0.002}Nb_{0.001}O_2$ | 201.9 | 89.9 | 97.3 |
| Example 7 | $Li_{1.02}Ni_{0.83}Co_{0.11}Mn_{0.056}Zr_{0.002}Nb_{0.002}O_2$ | 218.9 | 90.8 | 96.0 |
| Example 8 | $Li_{1.02}Ni_{0.7}Co_{0.1}Mn_{0.197}Zr_{0.002}Nb_{0.001}O_2$ | 212.6 | 90.3 | 96.1 |
| Example 9 | $Li_{1.02}Ni_{0.9}Co_{0.097}Zr_{0.002}Nb_{0.001}O_2$ | 229.3 | 90.0 | 95.4 |
| Example 10 | $Li_{1.02}Ni_{0.9}Mn_{0.097}Zr_{0.002}Nb_{0.001}O_2$ | 222.6 | 90.2 | 95.8 |
| Example 11 | $Li_{1.01}Ni_{0.67}Co_{0.05}Mn_{0.274}Ti_{0.002}Al_{0.004}O_2$ | 208.8 | 90.1 | 96.3 |
| Example 12 | $Li_{1.02}Ni_{0.6}Co_{0.1}Mn_{0.297}Zr_{0.002}Nb_{0.001}O_2$ | 203.3 | 90.2 | 96.4 |
| Example 13 | $Li_{1.02}Ni_{0.8}Co_{0.15}Al_{0.047}Zr_{0.002}Nb_{0.001}O_2$ | 224.6 | 90.4 | 96.3 |
| Example 14 | $Li_{1.02}Ni_{0.6}Co_{0.1}Mn_{0.297}Zr_{0.002}Nb_{0.001}O_2$ | 202.5 | 89.6 | 95.4 |
| Example 15 | $Li_{1.02}Ni_{0.6}Co_{0.1}Mn_{0.297}Zr_{0.002}Nb_{0.001}O_2$ | 203.7 | 89.7 | 95.2 |
| Comparative Example 1 | $Li_{1.02}Ni_{0.6}Co_{0.1}Mn_{0.297}Zr_{0.002}Nb_{0.001}O_2$ | 202.8 | 90.1 | 94.3 |
| Comparative Example 2 | $Li_{1.02}Ni_{0.9}Co_{0.05}Mn_{0.046}Zr_{0.002}Nb_{0.002}O_2$ | 226.2 | 89.9 | 93.6 |
| Comparative Example 3 | $Li_{1.01}Ni_{0.67}Co_{0.05}Mn_{0.274}Ti_{0.002}Al_{0.004}O_2$ | 206.7 | 89.4 | 94.5 |
| Comparative Example 4 | $Li_{1.02}Ni_{0.6}Co_{0.1}Mn_{0.297}Zr_{0.002}Nb_{0.001}O_2$ | 201.8 | 89.5 | 94.7 |

According to the test data of Examples 1 to 15, it can be seen that in the present disclosure, by synergistically controlling the mass content of free nitrate radical and the particle size distribution of particles of the cathode material, the cathode material simultaneously possesses excellent structural stability and high-voltage cycling stability performance.

From the test data of Example 1 and Example 14, it can be seen that in the preparation of Example 14, the frequency for grading was relatively high, resulting in a larger particle size distribution width Span(a) of particles within the range of 1 μm to 4 μm. Although the cathode material has an increased compact density, the impedance among particles increases, resulting in a slight decrease in the discharge capacity and initial coulombic efficiency of the cathode material compared to that of Example 1.

From the test data of Example 1 and Example 15, it can be seen that in the preparation of Example 15, the pressure for jet milling was relatively low and the frequency for grading was relatively low, resulting in a decreased particle size distribution width Span(b) of particles within the range of 0.1 μm to 1 μm, thereby causing relatively concentrated particles with a small particle size. Although the cathode material has a further increased compact density, side reactions between the cathode material and the electrolyte increase, affecting the initial coulombic efficiency and high-voltage cycling capacity retention rate of the cathode material.

From the test data of Example 1 and Comparative Example 1, Example 5 and Comparative Example 2, and Example 2 and Comparative Example 3, it can be seen that neither Comparative Example 1 nor Comparative Example 2 were subjected to a nitration and annealing treatment during their preparations, thus the oxide precursor of their cathode material does not contain free nitrate radical. Therefore, too little $Li_2O$ forms on the surface of the cathode material, and side reactions between the cathode material and an electrolyte intensify, especially during charging and discharging at a high-voltage, capacity loss of the cathode material intensifies, and the high-voltage cycling capacity retention rate slightly decreases.

From the test data of Example 1 and Comparative Example 4, it can be seen that during the nitration and annealing treatment of the hydroxide precursor, due to the much lower annealing temperature, the annealed precursor remains a hydroxide with a layered crystal structure. When this hydroxide precursor reacts with a lithium salt, since lithium has a faster thermodynamic diffusion rate compared to that of an oxide precursor, the sintered product has a more uniform particle size, with only a little particles having a particle size of 1 $\mu$m or less, resulting in only one characteristic peak involved by the cathode material, i.e., the second characteristic peak. Therefore, the cathode material has a decreased compact density, resulting in decreases in all of the discharge capacity, initial coulombic efficiency, and high-voltage cycling capacity retention rate of the cathode material.

The above descriptions are merely preferred embodiments of the present disclosure and are not intended to limit the present disclosure. For those skilled in the art, various modifications and changes can be made to the present disclosure. Any modification, equivalent replacement, improvement, etc., made within the spirit and principle of the present disclosure shall fall within the protection scope of the present disclosure.

**Claims**

1. A cathode material, **characterized in that** the cathode material has a mass content of free nitrate radical represented as Q ppm, wherein $10 \leq Q \leq 100$, and in a particle size number distribution curve of the cathode material, the cathode material has a first characteristic peak and a second characteristic peak, wherein the first characteristic peak is located within a range of 0.1 $\mu$m to 1 $\mu$m, excluding 1 $\mu$m, and the second characteristic peak is located within a range of 1 $\mu$m to 4 $\mu$m.

2. The cathode material according to claim 1, **characterized in that** the cathode material satisfies at least one of following:

    (1) Q is 10, 12, 25, 30, 50, 68, 75, 80, 85, 95, 100, or within a range composed of any two of the above values;
    (2)

$$10 \leq Q \leq 35;$$

    (3)

$$50 \leq Q \leq 70;$$

    and
    (4)

$$10 \leq Q \leq 80.$$

3. The cathode material according to claim 1, **characterized in that** the cathode material satisfies at least one of following:

    (1) particles having the first characteristic peak has a particle size distribution width represented as Span(b), which satisfies 0.4 < Span(b) < 0.8;
    (2) particles having the second characteristic peak has a particle size distribution width represented as Span(a), which satisfies 0.8 < Span(a) < 1.64; and
    (3) the first characteristic peak and the second characteristic peak have an intensity ratio of $\geq$ 1.5.

4. The cathode material according to claim 1, **characterized in that** the cathode material has a chemical formula of $Li_nNi_xM_yMn_zO_2$, wherein $0.9 \leq n \leq 1.1$, $0 \leq y < 1$, $0 \leq z < 1$, $x + y + z = 1$, and y and z are not both 0, and wherein element M comprises at least one of Co, Al, Zr, Mg, W, Ti, Ba, Sr, Mg, Cr, Zn, V, Cu, Nb, Mo, Y, and W.

5. The cathode material according to claim 1, **characterized in that** the cathode material has a volume particle size distribution satisfying at least one of following:

(1)

$$1.0\mu m \leq Dv10 \leq 2.5\mu m;$$

(2)

$$3.0\mu m \leq Dv50 \leq 4.5\mu m;$$

and
(3)

$$5.5\mu m \leq Dv90 \leq 10.0\mu m.$$

6. The cathode material according to claim 1, **characterized in that** the cathode material has a mass content of free sulfate radical represented as K ppm, wherein $10 \leq K < 800$.

7. The cathode material according to claim 1, **characterized in that** the cathode material is a single-crystal material, and the cathode material comprises crystal grains with a particle size of 1 $\mu$m to 5 $\mu$m.

8. The cathode material according to claim 1, **characterized in that** the cathode material has a specific surface area of 0.5 $m^2$/g to 1.5 $m^2$/g.

9. The cathode material according to claim 1, **characterized in that** the cathode material satisfies at least one of following:

(1) the cathode material has a tap density of 1.0 $g/cm^3$ to 3.0 $g/cm^3$;
(2) the cathode material has a compact density of 2.5 $g/cm^3$ to 3.5 $g/cm^3$; and
(3) the cathode material has a bulk density of 0.5 $g/cm^3$ to 1.5 $g/cm^3$.

10. The cathode material according to claim 1, **characterized in that** after charging and discharging a button battery made of the cathode material for one cycle, the cathode material is characterized through XPS, and in an XPS spectrum of the cathode material, the cathode material has a $Li_2O$ characteristic peak.

11. The cathode material according to claim 10, **characterized in that** in the XPS spectrum of the cathode material, the cathode material has a characteristic peak between 53.5 eV and 55 eV.

12. The cathode material according to claim 1, **characterized in that** the cathode material satisfies at least one of following:

(1) the first characteristic peak has a peak value of 6% to 15%; and
(2) the second characteristic peak has a peak value of 5% to 13%.

13. An oxide precursor, **characterized in that** by measuring the oxide precursor through XRD, the oxide precursor has diffraction peaks at 2θ ranging from 34.4° to 36.4° and from 42.3° to 44.3°, respectively.

14. A cathode plate, **characterized in that** the cathode plate comprises the cathode material according to any one of claims 1-12 or a cathode material prepared from the oxide precursor according to claim 13.

15. A battery, **characterized in that** the battery comprises the cathode material according to any one of claims 1-12 or a cathode material prepared from the oxide precursor according to claim 13.

FIG. 1

FIG. 2

FIG. 3

S4800 3.0kV 8.0mm x3.00k SE(M)                    10.0um

FIG. 4

FIG. 5

FIG. 6

FIG. 7

FIG. 8

## INTERNATIONAL SEARCH REPORT

| International application No. |
|---|
| **PCT/CN2025/129441** |

| A. | CLASSIFICATION OF SUBJECT MATTER |
|---|---|

H01M 4/36(2006.01)i

According to International Patent Classification (IPC) or to both national classification and IPC

| B. | FIELDS SEARCHED |
|---|---|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

DWPI, CNABS, CNTXT, ENTXTC, ENTXT, 中国期刊网全文数据库, CJFD: 贝特瑞, 盛进之, 刘国学, 郑玉, 宋雄, 杨顺毅, 黄友元, 正极, 镍钴锰锂, 三元, 硝酸根, NO3-, 颗粒, 粒径, 分布, XPS, XRD, 特征峰, D10, D50, D90, Positive electrode, lithium nickel cobalt manganese, ternary, nitrate, particles, size, distribution, characteristic peaks.

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 119764399 A (SHENZHEN BTR NANOMETER TECHNOLOGY CO., LTD.) 04 April 2025 (2025-04-04) description, paragraphs 5-19 and 36, and figure 6 | 1-15 |
| Y | CN 117293308 A (SHENZHEN BTR NANOMETER TECHNOLOGY CO., LTD.) 26 December 2023 (2023-12-26) description, paragraphs 8-20, 148, and 160 | 1-12, 14-15 |
| Y | CN 118743053 A (DONGGUAN AMPEREX TECHNOLOGY LTD.) 01 October 2024 (2024-10-01) description, paragraph 5 | 1-12, 14-15 |
| Y | WO 2011071068 A1 (NIPPON CHEMICAL INDUSTRIAL CO., LTD. et al.) 16 June 2011 (2011-06-16) paragraphs 13 and 29 | 6, 14-15 |
| X | CN 117476924 A (SHENZHEN BTR NANOMETER TECHNOLOGY CO., LTD.) 30 January 2024 (2024-01-30) description, paragraphs 94, 95, and 158 | 13-15 |

| ☑ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 December 2025** | **13 January 2026** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2025/129441** |

**C.     DOCUMENTS CONSIDERED TO BE RELEVANT**

| Category* | Citation of document, with indication, where appropriate, of the relevant passages | Relevant to claim No. |
|---|---|---|
| X | CN 118073560 A (SHENZHEN BTR NANOMETER TECHNOLOGY CO., LTD.) 24 May 2024 (2024-05-24)<br>      description, paragraphs 8, 27-28, 49, and 159 | 13-15 |
| A | CN 111193018 A (SONGSHAN LAKE MATERIALS LABORATORY) 22 May 2020 (2020-05-22)<br>      entire document | 1-15 |

Form PCT/ISA/210 (second sheet) (July 2022)

**INTERNATIONAL SEARCH REPORT**
**Information on patent family members**

International application No.

**PCT/CN2025/129441**

| Patent document cited in search report | | | Publication date (day/month/year) | Patent family member(s) | | | Publication date (day/month/year) |
|---|---|---|---|---|---|---|---|
| CN | 119764399 | A | 04 April 2025 | None | | | |
| CN | 117293308 | A | 26 December 2023 | KR | 20250048171 | A | 08 April 2025 |
| | | | | WO | 2025066131 | A1 | 03 April 2025 |
| | | | | EP | 4553926 | A1 | 14 May 2025 |
| CN | 118743053 | A | 01 October 2024 | WO | 2025081482 | A1 | 24 April 2025 |
| WO | 2011071068 | A1 | 16 June 2011 | JP | 2011124086 | A | 23 June 2011 |
| | | | | JP | 5584456 | B2 | 03 September 2014 |
| CN | 117476924 | A | 30 January 2024 | WO | 2025077850 | A1 | 17 April 2025 |
| | | | | KR | 20250130695 | A | 02 September 2025 |
| CN | 118073560 | A | 24 May 2024 | CN | 118073560 | B | 08 August 2025 |
| CN | 111193018 | A | 22 May 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411962916

- GB 190772016 T